# FASCICULE DE BREVET EUROPEEN

(11) **EP 3 807 001 B1**
(45) Date de publication et mention de la délivrance du brevet: **18.05.2022**
(21) Numéro de dépôt: 19731945.2
(22) Date de dépôt: 14.06.2019
(51) Int. Cl.: B01L 3/00, G01N 35/08

(54) **MÉTHODE DE TRANSFERT DE MATIÈRE DANS UN DISPOSITIF MILLIFLUIDIQUE**
VERFAHREN ZUR MATERIALÜBERTRAGUNG IN EINER MILLIFLUIDISCHEN VORRICHTUNG
METHOD FOR TRANSFERRING MATERIAL IN A MILLIFLUIDIC DEVICE

(30) Priorité: 14.06.2018 FR 1855240
(43) Date de publication de la demande: 21.04.2021
(73) Titulaire: Paris Sciences et Lettres, 75006 Paris (FR); Centre National de la Recherche Scientifique (CNRS), 75016 Paris (FR); Ecole Supérieure de Physique et de Chimie Industrielles de la Ville de Paris, 75005 Paris (FR)
(72) Inventeur: DUPIN, Jean-Baptiste, 75005 PARIS (FR); CHAURASIA, Ankur Shubhlal, 75014 PARIS (FR); BIBETTE, Jérôme, 75005 PARIS (FR); BREMOND, Nicolas, 75005 PARIS (FR); BAUDRY, Jean, 75011 PARIS (FR); SIRE, Wilfried, 75005 Paris (FR)
(74) Mandataire: Regimbeau
(86) Numéro de dépôt international: PCT/EP2019/065744
(87) Numéro de publication internationale: WO 2019/238947

(56) Documents cités:
- EP-A1- 1 306 674
- US-A1- 2011 112 503
- LINFENG XU ET AL: "Fusion and sorting of two parallel trains of droplets using a railroad-like channel network and guiding tracks", LAB ON A CHIP, vol. 12, no. 20, 14 juin 2012 (2012-06-14) , page 3936, XP055521125, ISSN: 1473-0197, DOI: 10.1039/c2lc40456g
- XIAOMING CHEN ET AL: "A microfluidic chip integrated with droplet generation, pairing, trapping, merging, mixing and releasing", RSC ADVANCES, vol. 7, no. 27, 16 mars 2017 (2017-03-16), pages 16738-16750, XP055521086, ISSN: 2046-2069, DOI: 10.1039/C7RA02336G
- BO-CHIH LIN ET AL: "On-demand liquid-in-liquid droplet metering and fusion utilizing pneumatically actuated membrane valves", JOURNAL OF MICROMECHANICS & MICROENGINEERING, INSTITUTE OF PHYSICS PUBLISHING, BRISTOL, GB, vol. 18, no. 11, 23 septembre 2008 (2008-09-23), page 115005, XP020145023, ISSN: 0960-1317, DOI: 10.1088/0960-1317/18/11/115005

## Description

### DOMAINE TECHNIQUE

La présente invention concerne une méthode de transfert de matière, dans un dispositif millifluidique, entre une goutte d'un premier train de gouttes et une goutte d'un deuxième train de gouttes, ainsi que l'utilisation de cette méthode pour la préparation d'échantillons biologiques ou chimiques, la mise en œuvre de réactions biologiques ou chimiques, le criblage de molécules d'origine synthétique ou biologique, ou le criblage ou la culture de microorganismes.

La présente invention concerne également un dispositif millifluidique apte à mettre en œuvre la méthode selon l'invention.

### ETAT DE LA TECHNIQUE ANTERIEURE

La préparation d'échantillons biologiques ou chimiques, que ce soit dans des réacteurs biologiques ou chimiques de grandes ou de petites tailles (ballons, falcon, plaques 96-puits, trains de gouttes, etc.), nécessite l'utilisation de contenants intermédiaires pour doser ou pipeter. Dans le cas des technologies adaptées à la biologie, et donc à fort nombre de réplicas (plaques multi-puits, trains de gouttes en millifluidique), il est toujours nécessaire d'utiliser une plaque multi-puits et des systèmes de pipetage, et dans la majorité des cas un expérimentateur.

La seule solution existante permettant de manipuler un grand nombre d'échantillons, de les analyser, de modifier à façon la composition des réacteurs, en particulier à partir d'un précédent réacteur dilué, le tout automatiquement et en maîtrisant les conditions expérimentales, est assez lourde. Dans le cas des cultures multi-parallélisées, il s'agit de coupler un lecteur de plaques multi-puits à un robot-pipeteur manipulateur de plaques, l'ensemble demeurant dans une chambre thermalisée et stérile. Il s'agit donc toujours d'une installation sur mesure coûteuse et utilisant beaucoup de consommables. En effet, si le nombre de réacteurs manipulables est appréciable, jusqu'à plusieurs dizaines de plaques 384-puits (~10 000 réacteurs) et que leur dilution peut être effectuée en très peu de temps (proportionnel au nombre de plaques et non au nombre de réacteurs), il faudra néanmoins consommer un nombre de plaques et de cônes en proportion : pour 1000 réacteurs-chémostat de 100µL chacun, dans le cas d'une dilution par 1000 à chaque étape, une expérience sur 1000 générations bactériennes (3 semaines) représente 10 L de milieu de culture, 300 plaques et 100.000 cônes de consommable.

De même, certains dispositifs microfluidiques peuvent permettre d'étudier un très grand nombre de réacteurs sur un grand nombre de générations, mais ils sont toujours réalisés sur mesure, pour une application bien précise, ne se prêtent que difficilement à une grande variabilité de la composition chimique des gouttes et il y est difficile de manipuler indépendamment des gouttes. Seulement deux technologies microfluidiques permettent, à notre connaissance, de manipuler facilement des gouttes et toutes deux nécessitent un pavage électro-activable, c'est-à-dire un système de forte complexité : ce sont la microfluidique par électro-mouillage et la technologie du joystick microfluidique.

En outre, dans le cas de la technologie millifluidique Millidrop, il est nécessaire de fabriquer un nouveau train de gouttes, à chaque étape, en aspirant lesdites gouttes dans une plaque 96-puits, puis, après incubation, de sortir les gouttes une à une dans une plaque 96-puits. Ces opérations prennent du temps, soumettent les gouttes à des conditions de température, pression, aération et mélange différentes, contrairement à la phase d'incubation, présentent de forts risques de contaminations externes à l'instrument, ne sont pas suffisamment robustes (inhomogénéité des gouttes générées, erreurs dans la sortie des gouttes, extrême dépendance à la température extérieure) et nécessitent un expérimentateur. Cette technologie, aussi puissante soit elle pour incuber un grand nombre de réacteurs et les analyser, est donc toujours limitée par la technologie des plaques multi-puits en termes de diversité (de composition) des gouttes à la génération et à la sortie (diversité préservée).

Dans le cas d'une expérience consistant en la propagation de lignées de bactéries, la technologie millifluidique permet ainsi de propager un nombre de lignées identique à une expérience sur plaque multi-puits, mais le temps séparant deux phases d'incubation est plus long. Dans les deux cas, les conditions de cette étape de transmission sont mal contrôlées et sa durée est non négligeable devant la durée d'une incubation. Il semble donc difficile de maintenir, par exemple, une population bactérienne en phase de croissance exponentielle, toutes conditions constantes (chémostat), sur un nombre significatif de générations (plusieurs milliers) et sur un grand nombre de réacteurs en parallèle.

Xu et al. (Lab Chip 2012, 12, 3936-3942) décrit également une méthode de fusion de gouttes de deux trains de gouttes parallèles utilisant un réseau de canaux microfluidiques de type chemins de fer. Cette méthode permet uniquement la fusion de paires de gouttes synchronisées et entraîne l'élimination des gouttes non fusionnées et non synchronisées.

Chen et al. (RSC Adv. 2017, 17, 16738-16750) décrit également une puce microfluidique pour la génération de gouttes, leur piégeage et appariement, le mélange des paires de gouttes piégées et la libération des gouttes ainsi mélangées.

Ainsi, les technologies actuelles de préparation d'échantillons biologiques ou chimiques présentent les difficultés suivantes :
- la difficulté de générer un grand nombre de réacteurs très différents en composition (gestion de la diversité des réacteurs) ;
- la difficulté de diluer et manipuler continuellement un grand nombre de réacteurs en contrôlant les conditions expérimentales (maintien de la continuité de l'expérience) et en évitant toute contamination extérieure ;
- la difficulté d'automatisation, un expérimentateur étant généralement nécessaire ;
- des difficultés en termes de temps, coût et nombre de consommables nécessaires pour effectuer ces étapes.

Il existe donc un besoin d'une nouvelle méthode de préparation d'échantillons biologiques et chimiques permettant de lever ces difficultés.

La méthode selon la présente invention permet ainsi de transférer, sans autre intermédiaire, un volume de matière prélevé sur une goutte choisie dans un train de gouttes vers une autre goutte choisie dans un train de gouttes. Cette opération se faisant au sein du système fluidique, les gouttes ne sont pas soumises à des conditions non voulues et ne peuvent pas être contaminées par l'extérieur. Aucun consommable n'est utilisé au cours de cette opération. En outre, un réacteur donné n'a pas à attendre que l'ensemble des nouveaux réacteurs soient terminés pour être effectif.

### RESUME DE L'INVENTION

La présente invention concerne ainsi une méthode de transfert de matière entre deux gouttes dans un dispositif millifluidique comprenant :
- un premier canal millifluidique et un deuxième canal millifluidique,
- un canal de transfert reliant le premier canal au deuxième canal, et
- un système de fermeture et d'ouverture permettant de contrôler l'ouverture et la fermeture du canal de transfert et qui comprend une position ouverte et une position fermée,
ladite méthode comprenant les étapes suivantes :
(a) mettre le système de fermeture et d'ouverture du canal de transfert en position fermée si celui-ci est en position ouverte ;
(b) générer, dans le premier canal millifluidique, un premier train de gouttes comprenant une phase continue, au moins deux gouttes et éventuellement au moins un espaceur entre deux gouttes successives Aₙ et Aₙ₊₁ où n ≥ 1 ;
(c) générer, dans le deuxième canal millifluidique, un deuxième train de gouttes comprenant une phase continue, au moins deux gouttes et éventuellement au moins un espaceur entre deux gouttes successives Bₘ et Bₘ₊₁ où m ≥ 1 ;
(d) positionner une goutte Aₙ du premier train de gouttes en face de la jonction entre le canal de transfert et le premier canal ;
(e) positionner une goutte Bₘ du deuxième train de gouttes en face de la jonction entre le canal de transfert et le deuxième canal ;
(f) mettre le système de fermeture et d'ouverture du canal de transfert en position ouverte de manière à permettre :
   le transfert d'au moins une partie de la goutte Aₙ du premier train de gouttes dans la goutte Bₘ du deuxième train de gouttes, ou
   le transfert d'au moins une partie de la goutte Bₘ du deuxième train de gouttes dans la goutte Aₙ du premier train de gouttes,
   avant de remettre le système de fermeture et d'ouverture du canal de transfert en position fermée ;
(g) éventuellement réitérer les étapes (d) à (f) une ou plusieurs fois avec la même goutte Aₙ ou une goutte différente du premier train de gouttes et avec la même goutte Bₘ ou une goutte différente du deuxième train de gouttes.

Selon un premier mode de réalisation (A1), l'étape (f) est mise en œuvre après les étapes (d) et (e) de sorte que le système de fermeture et d'ouverture du canal de transfert est mis en position ouverte une fois que les gouttes Aₙ et Bₘ sont positionnées respectivement aux deux extrémités du canal de transfert. Dans ce mode de réalisation, le système de fermeture et d'ouverture en position ouverte permet le passage de matière directement entre les gouttes Aₙ et Bₘ via le canal de transfert. Les étapes (a) à (g) peuvent ainsi être réalisées successivement.

Selon un deuxième mode de réalisation (A2), le canal de transfert comporte un deuxième système de fermeture et d'ouverture, le premier système de fermeture et d'ouverture étant plus proche de la connexion du canal de transfert au premier canal millifluidique que le deuxième système de fermeture et d'ouverture. Inversement, le deuxième système de fermeture et d'ouverture est plus proche de la connexion du canal de transfert au deuxième canal millifluidique que le premier système de fermeture et d'ouverture. Dans ce mode de réalisation, les deux systèmes de fermeture et d'ouverture sont en position fermée à l'étape (a) et l'étape (f) comprend les sous-étapes successives suivantes :
(f1) mettre le premier système de fermeture et d'ouverture du canal de transfert en position ouverte de sorte à permettre le transfert d'au moins une partie de la goutte Aₙ du premier train de gouttes dans le canal de transfert, puis remettre le premier système de fermeture et d'ouverture du canal de transfert en position fermée ;
(f2) mettre le deuxième système de fermeture et d'ouverture du canal de transfert en position ouverte de sorte à permettre le transfert de la matière issue de la goutte Aₙ du premier train de gouttes qui est présente dans le canal de transfert vers la goutte Bₘ du deuxième train de gouttes, puis remettre le deuxième système de fermeture et d'ouverture du canal de transfert en position fermée.

Ces étapes (f1) et (f2) permettent le transfert d'au moins une partie de la goutte Aₙ du premier train de gouttes dans la goutte Bₘ du deuxième train de gouttes.

L'étape (f) peut comprendre également les sous-étapes successives suivantes :
(f'1) mettre le deuxième système de fermeture et d'ouverture du canal de transfert en position ouverte de sorte à permettre le transfert d'au moins une partie de la goutte Bₘ du deuxième train de gouttes dans le canal de transfert, puis remettre le deuxième système de fermeture et d'ouverture du canal de transfert en position fermée ;
(f'2) mettre le premier système de fermeture et d'ouverture du canal de transfert en position ouverte de sorte à permettre le transfert de la matière issue de la goutte Bₘ du deuxième train de gouttes qui est présente dans le canal de transfert vers la goutte Aₙ du premier train de gouttes, puis remettre le premier système de fermeture et d'ouverture du canal de transfert en position fermée.

Ces étapes (f'1) et (f'2) permettent le transfert d'au moins une partie de la goutte Bₘ du deuxième train de gouttes dans la goutte Aₙ du premier train de gouttes.

Les étapes (f1) et (f'2) sont mises en œuvre après l'étape (d). Les étapes (f2) et (f'1) sont mises en œuvre après l'étape (e).

Selon un troisième mode de réalisation (A3), le système de fermeture et d'ouverture du canal de transfert comporte une deuxième position ouverte. Ainsi, il comporte :
- une position fermée qui empêche tout passage de matière dans le canal de transfert de part et d'autre du système de fermeture et d'ouverture ;
- une première position ouverte qui permet le transfert de matière du premier canal millifluidique vers le canal de transfert ou inversement du canal de transfert vers le premier canal millifluidique ;
- une deuxième position ouverte qui permet le transfert de matière du deuxième canal millifluidique vers le canal de transfert ou inversement du canal de transfert vers le deuxième canal millifluidique

Le mode de réalisation (A3) est donc similaire au mode de réalisation (A2) avec une seule vanne, la première position ouverte jouant le rôle du premier système de fermeture et d'ouverture de (A2) et la deuxième position ouverte jouant le rôle du deuxième système de fermeture et d'ouverture de (A2).

La méthode selon l'invention peut comprendre en outre les étapes additionnelles suivantes :
(h) éliminer le premier train de gouttes du premier canal millifluidique ou le deuxième train de gouttes du deuxième canal millifluidique ;
(i) générer, dans le canal millifluidique libéré à l'étape (h), un troisième train de gouttes comprenant une phase continue, au moins deux gouttes et éventuellement au moins un espaceur entre deux gouttes successives Cₚ et Cₚ₊₁ où p ≥ 1 ;
(j) mettre en œuvre les étapes (d) à (g), le troisième train de gouttes remplaçant le premier train de gouttes ou le deuxième train de gouttes éliminé à l'étape (h) ;
(k) éventuellement réitérer les étapes (h) à (j) une ou plusieurs fois.

La présente invention concerne également l'utilisation de la méthode selon l'invention pour la préparation d'échantillons biologiques ou chimiques, la mise en œuvre de réactions biologiques ou chimiques, le criblage de molécules d'origine synthétique ou biologique, ou le criblage ou la culture de microorganismes, par ex. des bactéries.

La présente invention concerne enfin un dispositif millifluidique pouvant être utilisé pour mettre en œuvre la méthode selon l'invention, comprenant :
- un premier canal millifluidique comprenant une entrée E1 et une sortie S1 ;
- un deuxième canal millifluidique comprenant une entrée E2 et une sortie S2 ;
- un canal de transfert reliant le premier canal millifluidique au deuxième canal millifluidique ;
- un système de fermeture et d'ouverture permettant de contrôler l'ouverture et la fermeture du canal de transfert ;
- un système de génération d'un train de gouttes connecté à la fois à l'entrée E1 du premier canal et à l'entrée E2 du deuxième canal ou deux systèmes de génération d'un train de gouttes connectés respectivement à l'entrée E1 du premier canal et à l'entrée E2 du deuxième canal ;
- un système de contrôle de la pression dans le premier canal millifluidique et dans le deuxième canal millifluidique ;
- un système de détection des gouttes tel qu'un système optique.

### FIGURES

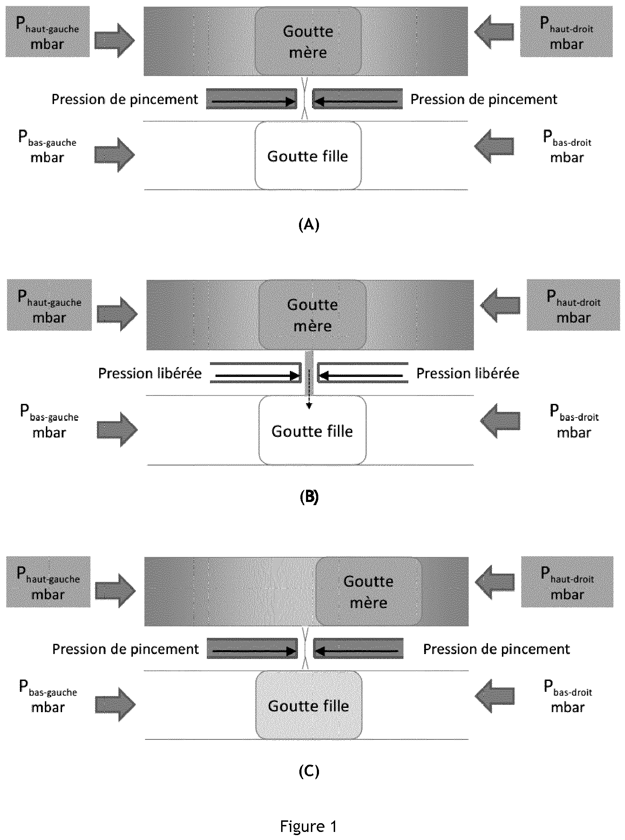

La Figure 1 représente schématiquement une partie du dispositif millifluidique selon l'invention, à savoir une portion du premier canal comprenant une goutte mère, une portion du second canal comprenant une goutte fille, le canal de transfert et le système de fermeture et d'ouverture dudit canal de transfert de type vanne à pincement pneumatique. Le dispositif est représenté avant (A), pendant (B) et après (C) un transfert de matière de la goutte mère vers la goutte fille. La Figure 1 représente un exemple de mise en œuvre de la méthode selon l'invention, selon le mode de réalisation (A1).

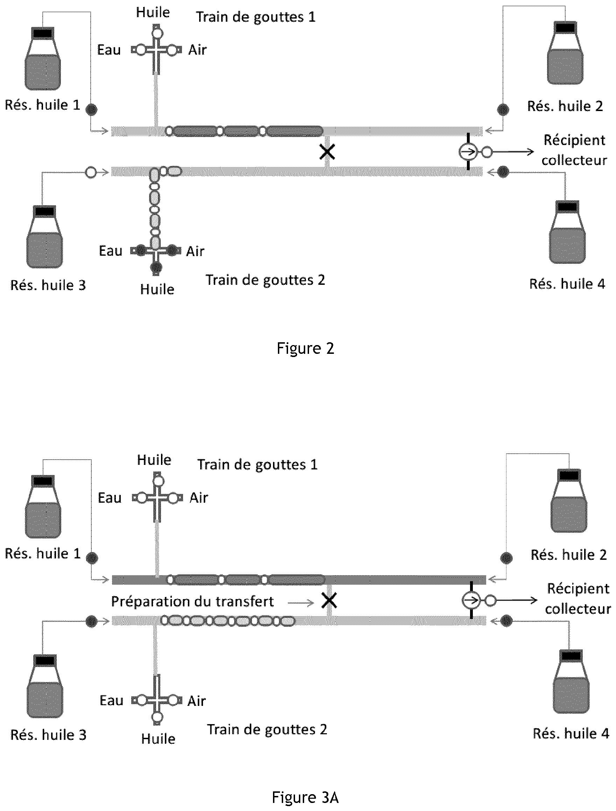

La Figure 2 représente schématiquement un dispositif millifluidique selon l'invention comprenant un premier canal et un deuxième canal relié par un canal de transfert, un système de fermeture et d'ouverture dudit canal de transfert en position fermée (représenté par une croix), deux systèmes de génération de trains de gouttes avec une jonction en « X », quatre réservoirs de phase continue (Rés. huile) et un récipient collecteur (non représenté). Ce dispositif comprend un premier train de gouttes et un deuxième train de gouttes en cours de formation.
La Figure 3A représente le dispositif de la Figure 2 dans la phase de préparation du transfert (augmentation de la pression dans le canal du haut).

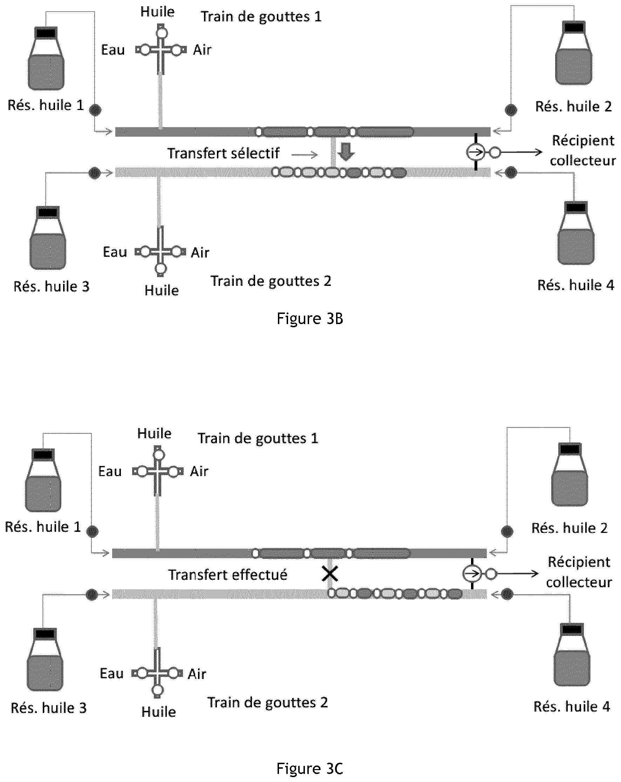

La Figure 3B représente le dispositif de la Figure 2 dans la phase de transfert sélectif de matière de gouttes du train de gouttes du canal du haut vers certaines gouttes (gouttes plus foncées) du train de gouttes du canal du bas.
La Figure 3C représente le dispositif de la Figure 2 une fois le transfert de matière effectué, les gouttes du train de gouttes du canal du bas ayant reçu de la matière de gouttes du train de gouttes du canal du haut étant plus foncées.

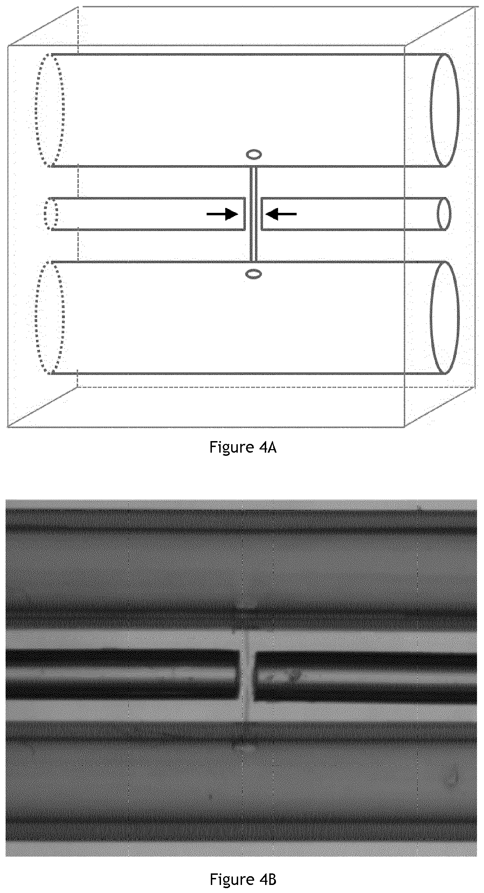

La Figure 4A représente schématiquement un bloc de transfert selon l'exemple 1 pouvant être utilisé dans le mode de réalisation (A1) et comprenant un canal de transfert, deux cavités traversant le bloc pour accueillir les premier et deuxième canaux microfluidiques et deux cavités de part et d'autre du canal de transfert destinées à permettre sa fermeture par application d'une pression.
La Figure 4B est une photographie du bloc de transfert schématisé à la Figure 4A.

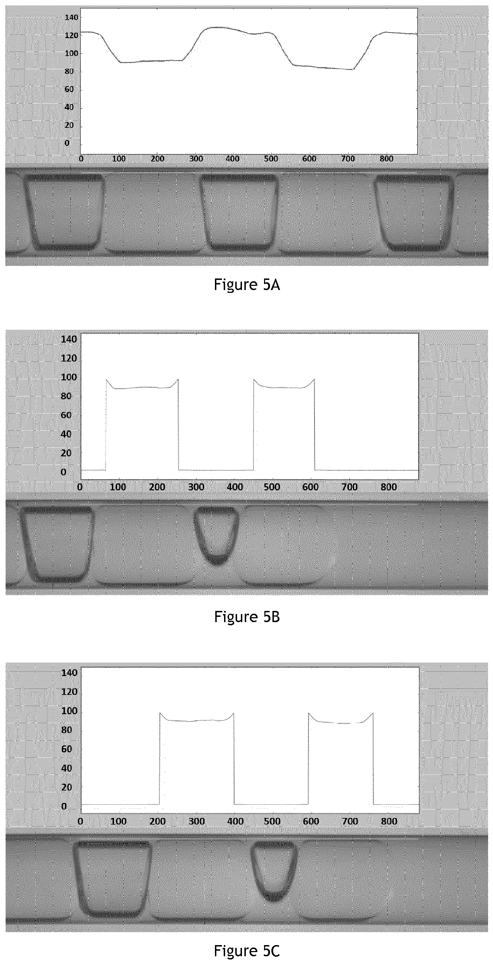

Les Figures 5A à 5C illustrent la méthode d'identification des gouttes par ligne de détection.

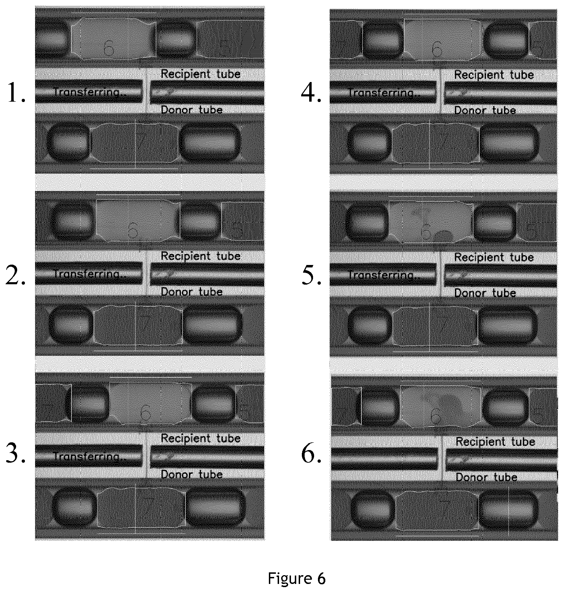

La Figure 6 présente six photographies chronologiques de la zone du dispositif autour du canal de transfert représentant différentes phases du transfert de matière d'une goutte donneuse (goutte n°7 du tuyau du bas - « donor tube ») vers une goutte receveuse (goutte n°6 du tuyau du haut - « recipient tube »), les gouttes étant identifiées par reconnaissance de forme.

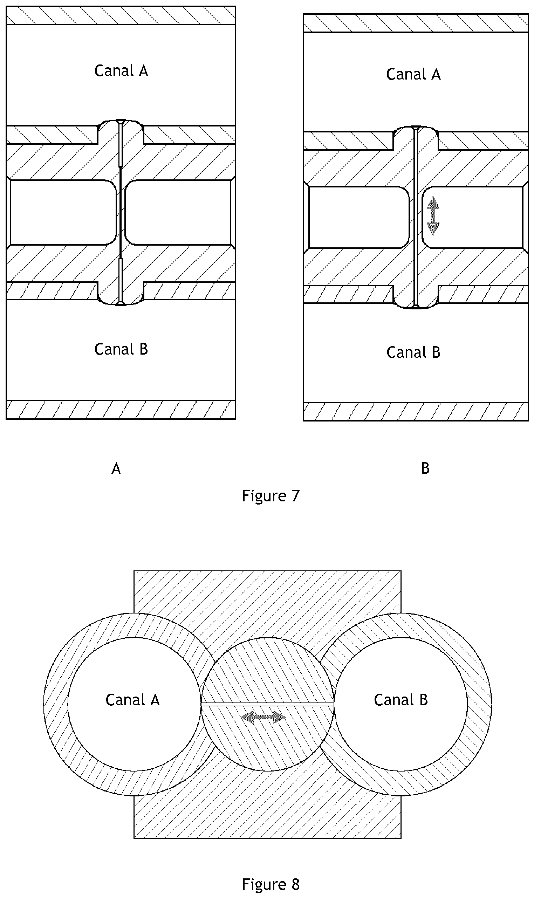

La Figure 7 représente une vue en coupe de la partie du dispositif selon l'invention comprenant le canal de transfert et comprenant une vanne à pincement pneumatique, selon le mode de réalisation (A1), en position fermée (A) de sorte à empêcher tout passage de matière entre les canaux A et B via le canal de transfert ou en position ouverte (B) de sorte à permettre le passage de matière entre les canaux A et B via le canal de transfert.
La Figure 8 représente une vue en coupe de la partie du dispositif selon l'invention comprenant le canal de transfert et comprenant une vanne à barillet, selon le mode de réalisation (A1), en position ouverte de sorte à permettre le passage de matière entre les canaux A et B via le canal de transfert inclus dans le cylindre interne de la vanne à barillet.

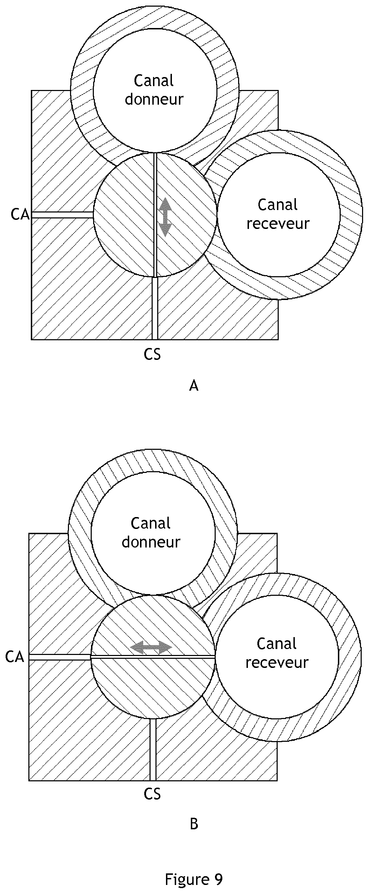

La Figure 9 représente une vue en coupe de la partie du dispositif selon l'invention comprenant le canal de transfert et comprenant une vanne à barillet, selon le mode de réalisation (A3), dans une position ouverte (A) de sorte à permettre le passage de matière entre le canal donneur et le canal de transfert et dans une autre position ouverte (B) de sorte à permettre le passage de matière entre le canal receveur et le canal de transfert, le canal de transfert étant inclus dans le cylindre interne de la vanne à barillet. CS représente le canal de succion et CA représente le canal d'addition qui sont détaillés ci-après.

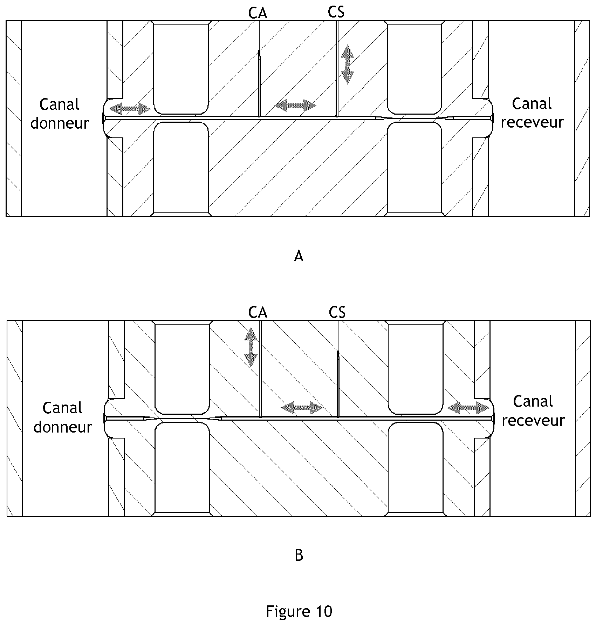

La Figure 10 représente une vue en coupe de la partie du dispositif selon l'invention comprenant le canal de transfert et comprenant deux vannes à pincement pneumatique (V1 et V2), selon le mode de réalisation (A2), avec (A) la vanne V1 ouverte et la vanne V2 fermée de sorte à permettre le passage de matière entre le canal donneur et le canal de transfert et avec (B) la vanne V1 fermée et la vanne V2 ouverte de sorte à permettre le passage de matière entre le canal receveur et le canal de transfert. CS représente le canal de succion et CA représente le canal d'addition qui sont détaillés ci-après.

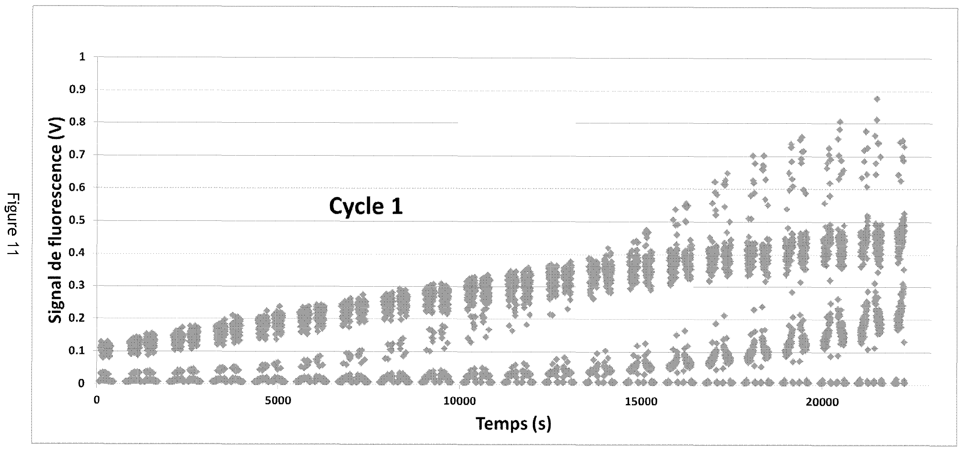

La Figure 11 représente les courbes de croissance (signal de fluorescence en volt en fonction du temps en seconde) de *Pseudomonas fluorescens* observées dans chaque bioréacteur pendant la première phase de croissance de l'exemple 4.

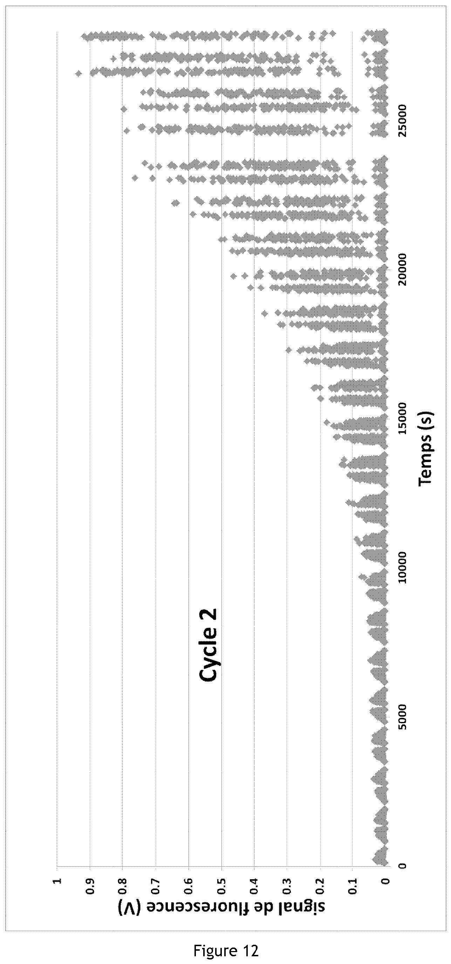

La Figure 12 représente les courbes de croissance (signal de fluorescence en volt en fonction du temps en seconde) de *Pseudomonas fluorescens* observées dans chaque bioréacteur pendant la deuxième phase de croissance de l'exemple 4.

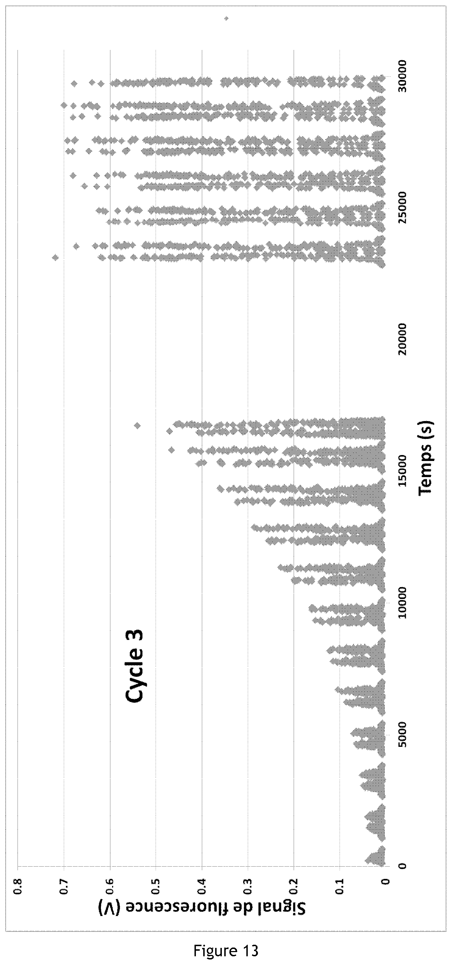

La Figure 13 représente les courbes de croissance (signal de fluorescence en volt en fonction du temps en seconde) de *Pseudomonas fluorescens* observées dans chaque bioréacteur pendant la troisième phase de croissance de l'exemple 4.

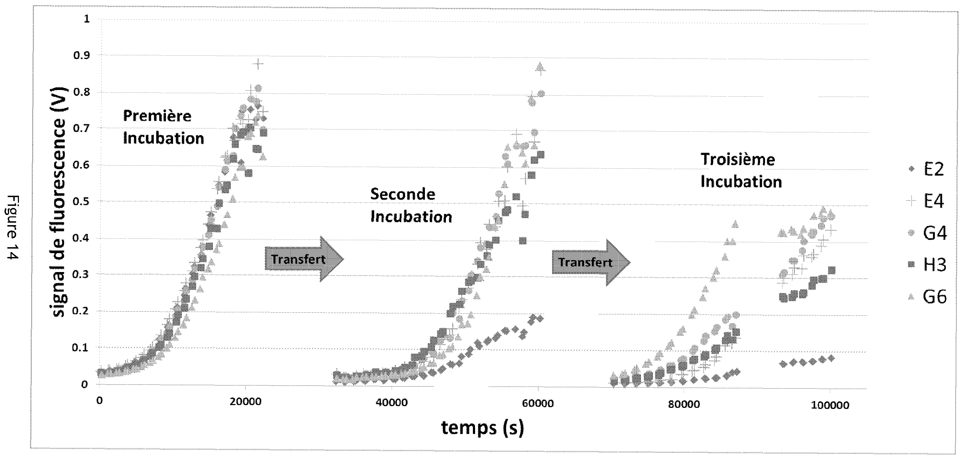

La Figure 14 représente l'évolution des courbes de croissance de cinq bioréacteurs (issus respectivement des puits E2, E4, G4, H3, G6 de la plaque multi-puits lors de la formation du premier train de gouttes) ayant une dilution faible en bactéries initialement (5.10⁵ bactéries) au cours des trois phases d'incubation de l'exemple 4.

### DEFINITIONS

Les termes « premier canal millifluidique » et « premier canal » sont utilisés indifféremment. De même, les termes « deuxième canal millifluidique » et « deuxième canal » sont utilisés indifféremment.

Un dispositif « microfluidique » est un dispositif dans lequel de petits volumes de fluides sont manipulés dans des canaux / tubes « microfluidiques », c'est-à-dire à l'échelle micrométrique. Un dispositif « millifluidique » est un dispositif dans lequel de petits volumes de fluides sont manipulés dans des canaux / tubes « millifluidiques », c'est-à-dire à l'échelle millimétrique.

Par « dimension interne » d'un canal, on entend, au sens de la présente invention, le diamètre interne du canal dans une géométrie cylindrique ou la hauteur ou largeur interne du canal dans une géométrie parallélépipédique. Le terme « espaceur » est également appelé dans l'art « séparateur ».

### DESCRIPTION DETAILLEE

### 1. Méthode selon l'invention

La méthode selon l'invention permet de transférer de la matière d'une goutte Aₙ présente dans un premier train de gouttes vers une autre goutte Bₘ présente dans un deuxième train de gouttes, ou inversement. Une telle opération de transfert peut être réitérée autant de fois que nécessaire avec la même goutte Aₙ du premier train de gouttes ou une autre goutte de ce premier train de gouttes et avec la même goutte Bₘ du deuxième train de gouttes ou une autre goutte de ce deuxième train de gouttes. Une telle méthode permet ainsi de pouvoir effectuer successivement un grand nombre de transferts de matière entre deux gouttes de trains de gouttes différents et de sélectionner précisément les gouttes qui transmettront de la matière et les gouttes qui recevront cette matière comme représenté sur les Figures 3A à 3C.

Le premier train de gouttes ou le deuxième train de gouttes peut également être éliminé du dispositif et être remplacé par un troisième train de gouttes de sorte à permettre des transferts de matière entre des gouttes du premier ou deuxième train de gouttes restant et des gouttes du troisième train de gouttes nouvellement introduit. Une telle opération peut également être réitérée autant de fois que nécessaire. Cela permet par exemple de pouvoir effectuer des dilutions successives.

Le train de gouttes ainsi éliminé peut cependant être stocké (par exemple dans un tuyau dédié tout au long de l'expérience ou dans une plaque multi-puits, la première option étant préférée) pour être réutilisé ultérieurement si nécessaire.

Dans le cadre des modes de réalisation (A2) et (A3), le premier canal et le deuxième canal peuvent également constituer un seul et même canal, de sorte que le premier train de gouttes et le deuxième train de gouttes sont un seul et même train de gouttes. Dans ce cas de figure, le transfert de matière est réalisé entre deux gouttes d'un même train de gouttes, par exemple entre la goutte Aₙ et la goutte Aₙ₊ₖ (correspondant à la goutte Bₘ ci-dessus) avec k ≥ 1.

Il peut également être envisagé d'utiliser un dispositif millifluidique comprenant un troisième canal millifluidique relié également au premier canal et/ou au deuxième canal via un canal de transfert. Ainsi, des transferts de matière pourront être effectués entre des gouttes d'un premier train de gouttes généré dans le premier canal, des gouttes d'un deuxième train de gouttes généré dans le deuxième canal et/ou des gouttes d'un troisième train de gouttes généré dans le troisième canal. Il pourra être envisagé d'utiliser un dispositif millifluidique comprenant davantage de canaux millifluidiques si nécessaire, et donc des canaux de transfert additionnels reliant les canaux millifluidiques deux à deux, chaque canal de transfert étant associé à au moins un système de fermeture et d'ouverture permettant d'en contrôler l'ouverture et la fermeture (par ex. 1 ou 2).

Il pourra également être envisagé d'avoir au moins un deuxième canal de transfert entre deux canaux millifluidiques du dispositif, comme par exemple entre le premier canal et le deuxième canal. Ce deuxième canal de transfert devra être associé également à au moins un système de fermeture et d'ouverture (par ex. 1 ou 2) permettant de contrôler l'ouverture et la fermeture de ce deuxième canal de transfert. Il pourra également être envisagé d'avoir davantage de canaux de transfert entre deux canaux millifluidiques, chaque canal de transfert devant être associé à au moins un système de fermeture et d'ouverture (par ex. 1 ou 2). La présence de plusieurs canaux de transferts entre deux canaux millifluidiques donnés du dispositif permet de transférer des volumes de matière différents (par ex. du fait d'une largeur / d'un diamètre différent entre les canaux de transfert), de dédier chaque canal de transfert au transfert d'une matière donnée, etc.

Les canaux millifluidiques du dispositif selon l'invention pourront être plus particulièrement des tubes millifluidiques, tels que des tubes en polytétrafluoroéthylène (PTFE).

Selon un mode de réalisation particulier, la méthode selon l'invention pourra être mise en œuvre de manière automatique, en utilisant notamment un dispositif millifluidique automatisé.

Afin de permettre le transfert de matière entre une goutte Aₙ d'un premier train de gouttes et une goutte Bₘ d'un deuxième train de gouttes dans le cadre du mode de réalisation (A1), il convient de positionner ces gouttes à chacune des extrémités du canal de transfert, c'est-à-dire à la jonction entre le canal de transfert et le premier canal et à la jonction entre le canal de transfert et le deuxième canal respectivement. Le système de fermeture et d'ouverture du canal de transfert est basculé en position ouverte, de sorte à permettre le transfert de matière, via le canal de transfert, entre les deux gouttes positionnées à chacune des extrémités du canal de transfert. Le système de fermeture et d'ouverture du canal de transfert est rebasculé en position fermée pour terminer le transfert de matière. Ainsi, le système de fermeture et d'ouverture du canal de transfert est maintenu en position fermée pendant toute la durée de la mise en œuvre de la méthode selon l'invention, excepté au moment de la réalisation d'un transfert de matière où ce système est basculé en position ouverte et permet le passage de matière entre les deux canaux millifluidiques via le canal de transfert qui les relie.

Afin de permettre le transfert de matière de la goutte Aₙ d'un premier train de gouttes vers la goutte Bₘ d'un deuxième train de gouttes dans le cadre des modes de réalisation (A2) et (A3), il convient, dans une première phase, de positionner la goutte Aₙ du premier train de gouttes à l'une des extrémités du canal de transfert, c'est-à-dire à la jonction entre le canal de transfert et le premier canal. Le premier système de fermeture et d'ouverture du canal de transfert est basculé en position ouverte (cas de (A2)) (cf. Figure 10A) ou le système de fermeture et d'ouverture du canal de transfert est basculé en première position ouverte (cas de (A3)) (cf. Figure 9A), de sorte à permettre le transfert de matière de la goutte Aₙ du premier train de gouttes dans le canal de transfert. Afin de terminer le transfert de matière dans le canal de transfert, le (premier) système de fermeture et d'ouverture du canal de transfert est rebasculé en position fermée. Dans une deuxième phase, la goutte Bₘ du deuxième train de gouttes est positionnée à l'autre extrémité du canal de transfert, c'est-à-dire à la jonction entre le canal de transfert et le deuxième canal. Le deuxième système de fermeture et d'ouverture du canal de transfert est basculé en position ouverte (cas de (A2)) (cf. Figure 10B) ou le système de fermeture et d'ouverture du canal de transfert est basculé en deuxième position ouverte (cas de (A3)) (cf. Figure 9B), de sorte à permettre le transfert de matière du canal de transfert vers la goutte Bₘ du deuxième train de gouttes. Une fois le transfert de matière terminé, le (deuxième) système de fermeture et d'ouverture du canal de transfert est rebasculé en position fermée. Afin de permettre au contraire le transfert de matière de la goutte Bₘ d'un deuxième train de gouttes vers la goutte Aₙ d'un premier train de gouttes dans le cadre des modes de réalisation (A2) et (A3), il suffira d'inverser l'ordre d'ouverture des(du) système(s) de fermeture et d'ouverture du canal de transfert. Ainsi, dans ces modes de réalisation, le(s) système(s) de fermeture et d'ouverture du canal de transfert est(sont) maintenu(s) en position fermée pendant toute la durée de la mise en œuvre de la méthode selon l'invention, excepté au moment de la réalisation d'un transfert de matière qui se fait en deux temps avec (1) introduction de la matière à transférer dans le canal de transfert et (2) transfert de la matière à transférer du canal de transfert vers la goutte réceptrice.

Le suivi dynamique des gouttes et du positionnement des gouttes en face des extrémités du canal de transfert pourra être effectué à l'aide d'un système de détection des gouttes tel qu'un système optique, utilisant éventuellement la fluorescence. Cela implique notamment de mesurer la position des gouttes, leur volume et l'écartement entre les gouttes. Il est en outre possible de contrôler la vitesse du train de gouttes et sa position relative vis-à-vis du canal de transfert, en appliquant un couple de pressions aux extrémités du train de gouttes. Ce contrôle peut être réalisé manuellement ou bien de manière automatisée.

Le positionnement d'une goutte en face d'une extrémité du canal de transfert pour effectuer un transfert de matière avec une autre goutte n'implique pas que la goutte soit stationnaire. Celle-ci peut en effet être en mouvement avec son train de gouttes du moment qu'elle reste positionnée en face de l'extrémité du canal de transfert durant toute la période de transfert, c'est-à-dire lorsque le canal de transfert est ouvert. Cela est permis notamment par le fait que les gouttes n'ont généralement pas une forme sphérique mais une forme oblongue.

Ainsi différents modes de réalisation peuvent être envisagés :
(1) les deux gouttes impliquées dans le transfert sont stationnaires ;
(2) l'une des gouttes est stationnaire et l'autre est en mouvement ;
(3) les deux gouttes impliquées dans le transfert sont en mouvement avec des vitesses de mouvement identiques ou différentes.

Le mode de réalisation (2) peut être particulièrement intéressant pour effectuer un transfert d'une goutte « mère » (qui restera stationnaire) vers plusieurs gouttes « filles » successives de l'autre train de gouttes qui pourra être en mouvement pour faire se succéder rapidement les différentes gouttes « filles » devant recevoir de la matière (par exemple pour être diluées).

Le mode de réalisation (3) pourra être utilisé pour transférer de la matière de plusieurs gouttes « mères » vers une plusieurs gouttes « filles ». Ainsi, en ne stoppant pas les trains de gouttes à chaque transfert, la fréquence des transferts se trouve augmentée et, pour une taille de train de gouttes croissante, le temps nécessaire pour transférer un train de gouttes complet est proportionnel à la taille du train de gouttes. Dans ce mode de réalisation, le train de gouttes « mères » avancera avantageusement plus rapidement que le train de gouttes « filles » afin de permettre de transférer de la matière d'un grand nombre de gouttes « mères » vers un petit nombre de gouttes « filles ». Si nécessaire, le train de gouttes « mères » pourra faire plusieurs allers-retours.

La pression dans les différents canaux pourra être ajustée afin d'orienter le transfert du canal dit « donneur » vers le canal dit « receveur ».

Ainsi, dans le mode de réalisation (A1), la pression dans le premier canal et/ou le deuxième canal pourra être ajustée de sorte à orienter le transfert de matière de la goutte Aₙ du premier train de gouttes vers la goutte Bₘ du deuxième train de gouttes ou de la goutte Bₘ du deuxième train de gouttes vers la goutte Aₙ du premier train de gouttes. Pour cela, la pression devra être ajustée dans l'un ou l'autre des deux canaux, ou dans les deux, de sorte à créer une différence de pression entre les deux canaux et orienter le transfert de matière du canal ayant la pression la plus élevée vers le canal ayant la pression la moins élevée. Cette pression sera avantageusement ajustée avant la mise en position ouverte du système de fermeture et d'ouverture du canal de transfert. Ainsi :
- pour permettre le transfert d'au moins une partie de la goutte Aₙ du premier train de gouttes dans la goutte Bₘ du deuxième train de gouttes, la pression devra être plus élevée dans le premier canal (canal donneur) par rapport à la pression dans le deuxième canal (canal receveur) ;
- pour permettre le transfert d'au moins une partie de la goutte Bₘ du deuxième train de gouttes dans la goutte Aₙ du premier train de gouttes, la pression devra être plus élevée dans le deuxième canal (canal donneur) par rapport à la pression dans le premier canal (canal receveur).

La différence de pression imposée entre les deux extrémités du canal de transfert assure un débit fixé de matière d'un canal vers l'autre. Le temps d'ouverture du canal de transfert conditionne ainsi le volume de matière transféré d'une goutte à l'autre.

Le transfert de matière d'une goutte mère vers une goutte fille est représenté notamment sur la Figure 1, la pression dans le canal du haut étant alors plus élevée que celle dans le canal du bas.

Dans les modes de réalisation (A2) et (A3), la mise en œuvre des étapes (f1) et (f2) permet le transfert d'au moins une partie de la goutte Aₙ du premier train de gouttes dans la goutte Bₘ du deuxième train de gouttes, le premier canal étant alors le canal donneur et le deuxième canal étant le canal receveur. Au contraire, la mise en œuvre des étapes (f'1) et (f'2) permet le transfert d'au moins une partie de la goutte Bₘ du deuxième train de gouttes dans la goutte Aₙ du premier train de gouttes, le premier canal étant alors le canal receveur et le deuxième canal étant le canal donneur.

Afin d'orienter le transfert de matière comme indiqué ci-dessus, le canal de transfert sera en outre connecté avantageusement à un canal de succion (CS) et à un canal d'addition (CA) et la pression sera ajustée dans les différents canaux comme suit :
- pour permettre le transfert de matière du canal donneur vers le canal de transfert (cf. Figure 10A dans le cas de (A2) ou Figure 9A dans le cas de (A3)), la pression sera ajustée dans le canal donneur et/ou le canal de succion de sorte à créer une différence de pression entre ces deux canaux, la pression devant être plus élevée dans le canal donneur par rapport à la pression dans le canal de succion ;
- pour permettre le transfert de matière du canal de transfert vers le canal receveur (cf. Figure 10B dans le cas de (A2) ou Figure 9B dans le cas de (A3)), la pression sera ajustée dans le canal receveur et/ou le canal d'addition de sorte à créer une différence de pression entre ces deux canaux, la pression devant être plus élevée dans le canal d'addition par rapport à la pression dans le canal receveur.

La pression sera avantageusement ajustée avant la mise en position ouverte du système de fermeture et d'ouverture correspondant du canal de transfert. Le temps d'ouverture conditionnera le volume de matière transféré.

Le système de fermeture et d'ouverture du canal de transfert comprend :
- une position fermée qui empêche tout passage de matière dans le canal de transfert de part et d'autre dudit système ;
- une ou plusieurs positions ouvertes, plus particulièrement une (dans le cas des modes de réalisation (A1) et (A2)) ou deux (dans le cas du mode de réalisation (A3)), dans lesquelles le passage de matière dans le canal de transfert, de part et d'autre du point d'ouverture dudit système, est possible.

Dans le cadre des modes de réalisation (A1) et (A2), le système de fermeture et d'ouverture du canal de transfert pourra être tout système apte à empêcher tout passage de matière dans le canal de transfert, à travers ledit système, lorsqu'il est en position fermée et au contraire à permettre le passage de matière dans le canal de transfert, à travers ledit système, lorsqu'il est en position ouverte. Un tel système comprend une seule position ouverte. Il peut s'agir par exemple d'une vanne utilisée dans les systèmes microfluidiques telles que celles décrites dans Anthony K. Au et al. « Microvalves and Micropumps for BioMEMS », Micromachines 2011, 2, 179-220. Il pourra s'agir par exemple d'une vanne à barillet (encore appelée vanne rotative), d'une vanne translationnelle, d'une vanne à pincement telle qu'une vanne à pincement mécanique ou une vanne à pincement pneumatique (e.g. une vanne de type Quake), ou d'une vanne solénoïde (encore appelée vanne électromagnétique ou électrovanne).

La vanne à barillet, encore appelée vanne rotative, comprend par exemple dans ce cas un cylindre interne percé de deux ouvertures qui peut tourner à l'intérieur d'une pièce externe comprenant un évidement cylindrique ajusté à la taille du cylindre interne, ladite pièce étant percée également de deux ouvertures positionnées l'une par rapport à l'autre de la même manière que pour le cylindre interne. Lorsque le cylindre interne et la pièce externe sont positionnés de telle sorte que chaque ouverture du cylindre interne est superposée respectivement à une ouverture de la pièce externe, la vanne est en position ouverte et permet le passage de matière (voir Figure 8). Lorsque le cylindre interne et la pièce externe sont positionnés de telle sorte que leurs ouvertures ne se chevauchent pas, la vanne est en position fermée et ne permet pas le passage de matière. Dans un tel mode de réalisation, le canal de transfert peut être situé à l'intérieur du cylindre interne de la vanne à barillet et relié ses deux ouvertures (cf. Figure 8) ou peut être constitué de deux portions distinctes (par exemple deux tubes en Teflon^{®}), chacune reliée à l'une des ouvertures de la pièce externe de la vanne à barillet.

Dans le cadre de l'utilisation d'une vanne translationnelle, le canal de transfert sera également constitué de deux portions distinctes (par exemple deux tubes) ajustées l'une en face de l'autre, en position ouverte, de sorte à permettre le passage de matière à travers le canal de transfert. La vanne translationnelle, par exemple activée par un électro-aimant, va permettre, lorsqu'elle est basculée en position fermée, de translater l'une des portions du canal par rapport à l'autre de sorte à ce qu'elles ne soient plus ajustées l'une en face de l'autre et donc à empêcher tout passage de matière à travers le canal de transfert

Une vanne à pincement va permettre de fermer le canal de transfert par pincement de celui-ci. Dans ce mode de réalisation, il convient donc d'utiliser un canal de transfert pouvant être pincé, et notamment réalisé dans une matière flexible, tel qu'un polymère flexible. Le pincement pourra par exemple être mécanique ou pneumatique.

Dans le cas d'un pincement pneumatique, le canal de transfert peut être formé dans un bloc de PDMS (polydiméthylsiloxane) qui pourra être suffisamment comprimé, par application d'une pression externe, pour être complètement fermé (voir Figure 7A). La diminution de la pression permettra ensuite d'ouvrir le canal de transfert au moment requis (voir Figure 7B). La surface interne du canal de transfert en PDMS pourra être traitée si nécessaire en vue de modifier les propriétés de surface, par exemple par silanisation. Plusieurs méthodes peuvent être envisagées pour appliquer cette pression externe. Selon un mode de réalisation particulier, deux cavités sont présentes de part et d'autre du canal de transfert, idéalement situées à hauteur environ du milieu du canal de transfert. Le canal se trouvera ainsi coincé en sandwich entre ces deux cavités. En augmentant la pression dans ces deux cavités, par exemple à hauteur de 1 bar, le canal de transfert pourra être comprimé. Pour cela, la distance séparant chaque cavité du canal de transfert ne doit pas être trop importante pour permettre cette compression, par exemple 50 à 150 µm, notamment 50 à 100 µm, tel qu'environ 80 µm.

Une vanne solénoïde (encore appelée vanne électromagnétique ou électrovanne) est une vanne commandée électriquement qui pourra donc être utilisée dans un dispositif automatisé.

Avantageusement, le système de fermeture et d'ouverture du canal de transfert sera une vanne à pincement, et notamment à pincement pneumatique.

Dans le cadre du mode de réalisation (A3), le système de fermeture et d'ouverture du canal de transfert comprend deux positions ouvertes, c'est-à-dire qu'il comprend deux points distincts d'ouverture du canal de transfert qui peuvent être ouverts indépendamment l'un de l'autre. Il pourra s'agir de tout système apte à empêcher tout passage de matière dans le canal de transfert, à travers ledit système, lorsqu'il est en position fermée (c'est-à-dire que les deux points d'ouverture du canal de transfert sont fermés) et au contraire à permettre le passage de matière dans le canal de transfert à travers uniquement le point d'ouverture qui est ouvert.

Il s'agira plus particulièrement d'une vanne à barillet, encore appelée vanne rotative. Contrairement aux vannes à barillet des modes de réalisation (A1) et (A2), une telle vanne comprendra par exemple un cylindre interne percé de deux ouvertures qui peut tourner à l'intérieur d'une pièce externe comprenant un évidement cylindrique ajusté à la taille du cylindre interne, ladite pièce étant percée de quatre ouvertures. Lorsque le cylindre interne et la pièce externe sont positionnés de telle sorte que leurs ouvertures ne se chevauchent pas, la vanne est en position fermée et ne permet pas le passage de matière. Lorsque le cylindre interne et la pièce externe sont positionnés de telle sorte que les deux ouvertures du cylindre interne sont superposées respectivement avec deux ouvertures de la pièce externe, la vanne est dans l'une de ces positions ouvertes (voir Figure 9). Dans un tel mode de réalisation, le canal de transfert est idéalement situé à l'intérieur du cylindre interne de la vanne à barillet et relié ses deux ouvertures (cf. Figure 9).

Un train de gouttes comprend, notamment est constitué de, une phase continue, au moins deux gouttes et éventuellement au moins un espaceur entre deux gouttes successives. Les espaceurs ont pour but d'éviter la fusion des gouttes entre elles. Lorsqu'un espaceur n'est pas présent du fait que les gouttes n'ont pas tendance à fusionner entre elles, les gouttes sont séparées entre elles par la phase continue. Avantageusement, un train de gouttes comprend, notamment est constitué de, une phase continue, au moins deux gouttes et au moins un espaceur entre deux gouttes successives.

La phase continue permet d'éviter que les gouttes et les espaceurs ne mouillent la paroi du canal en les entourant d'un film mince de phase continue. Cela permet ainsi de faciliter le mouvement du train de gouttes dans le canal en formant un film de lubrification entre les gouttes / les éventuels espaceurs et la paroi du canal.

Afin de pouvoir former un train de gouttes, la phase continue devra être substantiellement non miscible à la phase des gouttes et la phase du ou des espaceurs, lorsqu'ils sont présents, devra être substantiellement non miscible à la phase continue et à la phase des gouttes.

La phase continue pourra être une huile minérale ou fluorée, par exemple une huile fluorée.

La phase constituant les gouttes comprendra avantageusement une solution aqueuse, c'est-à-dire comprenant de l'eau comme fluide principal.

La phase constituant le ou les éventuels espaceurs pourra être un gaz tel que de l'air ; ou un liquide immiscible à la phase continue et à la phase constituant les gouttes à espacer, tel qu'une huile minérale ou une huile de silicone. De préférence, la phase de l'espaceur est un gaz tel que l'air.

La formation d'un train de gouttes dans un canal millifluidique est bien connue de l'homme du métier. Toute méthode apte à la formation d'un train de gouttes pourra être utilisée dans le cadre de la présente invention.

Selon un premier mode de réalisation, le train de gouttes est généré à l'aide d'une jonction dite jonction « T ». Dans ce mode de réalisation, un fluide porteur (la phase continue) circule dans un canal principal à vitesse constante. Un canal secondaire est connecté au canal principal substantiellement de manière perpendiculaire de sorte à former une jonction en « T ». Un second fluide (destiné à constituer les gouttes), immiscible au fluide porteur, circule dans ce canal secondaire vers la jonction « T » formée entre les deux canaux. En ajustant le débit de chacun des fluides, le fluide porteur va scinder le second fluide de sorte à former des gouttes homogènes. Afin d'ajouter un espaceur entre chaque goutte, un deuxième canal secondaire est connecté au canal principal substantiellement de manière perpendiculaire de sorte à former une seconde jonction « T » en aval de la première jonction « T ». Un troisième fluide (destiné à constituer les espaceurs), immiscible au fluide porteur et au second fluide, circule dans ce deuxième canal secondaire vers la deuxième jonction « T ». En ajustant le débit de chacun des fluides, le fluide porteur va scinder le troisième fluide de sorte à former des espaceurs entre deux gouttes. Cette méthode permet d'avoir des gouttes de même composition ou avec un gradient de composition par exemple.

Selon un deuxième mode de réalisation, le train de gouttes est généré à l'aide d'une jonction dite jonction « X ». Ce mode de réalisation est similaire au mode de réalisation ci-dessus avec deux jonctions « T ». Dans ce cas, les deux canaux secondaires se font face de sorte à former une jonction en « X » avec le canal principal. Des espaceurs sont donc nécessairement présents. Les fluides des gouttes et des espaceurs se scindent au niveau de la jonction « X » en opposition de phase. Ce n'est plus le fluide porteur qui provoque la scission des fluides immiscibles en gouttes / espaceurs mais ces deux fluides immiscibles qui sont ainsi couplés au niveau de la jonction. Un tel système de génération de trains de gouttes est représenté sur la Figure 2 avec l'huile correspondant à la phase continue, l'eau correspondant à la phase destinée à former les gouttes et l'air correspondant à la phase destinée à former les espaceurs. La formation d'espaceurs de fluide compressible (e.g. un gaz tel que l'air) au niveau de la jonction « X » est conditionnée par la pression hydraulique au niveau de cette jonction. Cette pression peut fluctuer au fur et à mesure de la génération du train de gouttes.

Selon un troisième mode de réalisation, pour amorcer le procédé, le train de gouttes est généré en aspirant continuellement un fluide à l'extrémité d'un tube qui sera soit plongé dans un réservoir contenant une solution aqueuse destinée à former les gouttes à la surface de laquelle se trouve un film de fluide porteur, soit maintenu dans l'air en vue de former un espaceur d'air. Plusieurs réservoirs de solutions aqueuses différentes peuvent être utilisés en vue de former des gouttes de compositions différentes. Les réservoirs peuvent par exemple être constitués d'un puits d'une plaque multi-puits. Dans ce cas, le train de gouttes est généré en aspirant successivement le contenu de chaque puits. Chaque goutte sera alors constituée par le contenu d'un puit.

La méthode selon la présente invention pourra plus particulièrement être mise en œuvre à l'aide d'un dispositif millifluidique tel que décrit au paragraphe 2 ci-dessous.

### 2. Dispositif permettant de mettre en œuvre la méthode selon l'invention

La présente invention concerne également un dispositif millifluidique pouvant être utilisé pour mettre en œuvre la méthode selon l'invention, comprenant :
- un premier canal millifluidique comprenant une entrée E1 et une sortie S1 ;
- un deuxième canal millifluidique comprenant une entrée E2 et une sortie S2 ;
- un canal de transfert reliant le premier canal millifluidique au deuxième canal millifluidique ;
- un système de fermeture et d'ouverture permettant de contrôler l'ouverture et la fermeture du canal de transfert ;
- un système de génération d'un train de gouttes connecté à la fois à l'entrée E1 du premier canal et à l'entrée E2 du deuxième canal ou deux systèmes de génération d'un train de gouttes connectés respectivement à l'entrée E1 du premier canal et à l'entrée E2 du deuxième canal ;
- un système de contrôle de la pression dans le premier canal millifluidique et dans le deuxième canal millifluidique ;
- un système de détection des gouttes tel qu'un système optique.

Ainsi, le dispositif millifluidique selon la présente invention comprend un premier canal millifluidique et au moins un deuxième canal millifluidique. Il pourra comprendre également au moins un troisième canal millifluidique. Un ou plusieurs autres canaux millifluidiques pourront également être présents si nécessaire.

Ces canaux millifluidiques sont destinés à contenir et permettre la circulation de trains de gouttes, comme mentionné précédemment. Ces canaux peuvent avoir par exemple une géométrie cylindrique (e.g. tuyau) ou parallélépipédique. Avantageusement, les canaux millifluidiques auront une géométrie cylindrique. Selon un mode de réalisation particulier, les canaux auront une géométrie cylindrique (e.g. tuyau), et pourront être plus particulièrement des tuyaux, par exemple en PTFE.

Avantageusement, la dimension interne D de chaque canal millifluidique sera indépendamment comprise entre 10 µm et 3 mm, notamment comprise entre 500 µm et 2,5 mm, avantageusement comprise entre 1,5 mm et 2,2 mm. Ainsi :
si le premier canal a une dimension interne D₁, où D₁ représente le diamètre interne du premier canal dans une géométrie cylindrique ou la hauteur ou largeur interne du premier canal dans une géométrie parallélépipédique ; et
si le deuxième canal a un dimension interne D₂, où D₂ représente le diamètre interne du deuxième canal dans une géométrie cylindrique ou la hauteur ou largeur interne du deuxième canal dans une géométrie parallélépipédique ;
D₁ et D₂ seront indépendamment compris entre 10 µm et 3 mm, notamment compris entre 500 µm et 2,5 mm, avantageusement compris entre 1,5 mm et 2,2 mm.

En effet, lorsque la dimension interne du canal, notamment son diamètre interne, est supérieur à 3 mm, les effets de gravité peuvent déstabiliser le train de gouttes (e.g. étalement du train de gouttes, fusion et scission de gouttes).

Le dispositif millifluidique selon la présente invention comprend au moins un canal de transfert reliant le premier canal millifluidique au deuxième canal millifluidique. Un ou plusieurs autres canaux de transfert, notamment au moins un deuxième canal de transfert, peuvent relier le premier canal millifluidique au deuxième canal millifluidique. De même, si le dispositif selon l'invention comprend plus de deux canaux millifluidiques, un ou plusieurs canaux de transfert pourront relier les canaux millifluidiques deux à deux.

Chaque canal de transfert sera muni d'au moins un système de fermeture et d'ouverture dudit canal de transfert, par exemple un ou deux. Un tel système de fermeture et d'ouverture pourra être tel que défini ci-dessus.

Le canal de transfert a une dimension interne d, où d représente plus particulièrement le diamètre interne du canal de transfert dans une géométrie cylindrique ou la hauteur ou largeur interne du canal de transfert dans une géométrie parallélépipédique. Le canal de transfert aura avantageusement une géométrie cylindrique. Cette dimension interne sera en particulier inférieure ou égale à chaque dimension interne D des canaux millifluidique qu'il relie. Plus particulièrement, le rapport d/D sera compris entre 0,001 et 1, notamment compris entre 0,01 et 0,2, avantageusement compris entre 0,02 et 0,1. Ainsi, pour le canal de transfert de dimension interne d reliant le premier canal millifluidique au deuxième canal millifluidique ayant respectivement des dimensions internes D₁ et D₂, la dimension interne D représentant la plus petite valeur entre D₁ et D₂ sera prise en considération et le rapport d/D sera avantageusement compris entre 0,001 et 1, notamment compris entre 0,01 et 0,2, avantageusement compris entre 0,02 et 0,1. Le canal de transfert pourra avoir par exemple une dimension interne d comprise entre 50 et 100 µm.

Le dispositif selon l'invention pourra comprendre un seul système de génération d'un train de gouttes relié à chacune des entrées du premier canal, du deuxième canal et de tout autre canal millifluidique présent dans le dispositif. Le dispositif pourra également comprendre plusieurs systèmes de génération d'un train de gouttes, et notamment autant de système de génération d'un train de gouttes que de canal millifluidique présent dans le dispositif, chaque système de génération d'un train de gouttes étant alors connecté à l'entrée d'un canal millifluidique.

Le système de génération d'un train de gouttes pourra être tout système utilisé dans l'art pour former un train de gouttes. Il pourra s'agir par exemple d'un système comprenant une ou deux jonctions « T » ou une jonction « X » comme décrit ci-dessus.

Le dispositif selon l'invention comprend également un système de contrôle de la pression dans le premier canal millifluidique et dans le deuxième canal millifluidique, et dans éventuellement tout autre canal millifluidique présent dans le dispositif. Ce système de contrôle de la pression permet de mettre en mouvement le train de gouttes mais permet également d'ajuster la pression dans les canaux pour permettre les transferts de matière.

Le dispositif millifluidique selon la présente invention pourra comprendre également un ou plusieurs réservoirs et un ou plusieurs récipients collecteurs.

Le dispositif pourra comprendre en particulier au moins un réservoir destiné à contenir une phase continue et notamment quatre réservoirs destinés à contenir une phase continue connectés respectivement à l'entrée E1 et la sortie S1 du premier canal et à l'entrée E2 et la sortie S2 du deuxième canal. Ainsi, chaque entrée ou sortie de chaque canal millifluidique présent dans le dispositif sera connecté à un réservoir destiné à contenir une phase continue. De tels réservoirs destinés à contenir une phase continue sont représentés notamment sur la Figure 2 (Rés. huile 1, 2, 3 et 4).

Le dispositif pourra comprendre également un ou plusieurs récipients collecteurs connecté(s) aux sorties des canaux millifluidique(s) présent dans le dispositif. De préférence, le dispositif comprendra autant de récipient collecteur que de canaux millifluidiques présents dans le dispositif. Ainsi, chaque sortie de chaque canal millifluidique présent dans le dispositif sera connecté à un récipient collecteur.

Selon un mode de réalisation particulier, le dispositif selon l'invention comprend :
- quatre réservoirs destinés à contenir une phase continue connectés respectivement à l'entrée E1 et à la sortie S1 du premier canal et à l'entrée E2 et à la sortie S2 du deuxième canal ; et
- deux récipients collecteurs connectés respectivement à la sortie S1 du premier canal et à la sortie S2 du deuxième canal.

Le dispositif pourra comprendre également un ou plusieurs réservoirs destinés à contenir la ou les phases qui constitueront les gouttes des trains de gouttes. Lorsqu'un ou des espaceurs seront présents, le pourra comprendre également un ou plusieurs réservoirs destinés à contenir la phase qui constituera le ou les espaceurs des trains de gouttes. Ce ou ces réservoirs destinés à contenir la ou les phases qui constitueront les gouttes et la phase qui constituera le ou les espaceurs, ainsi qu'un ou des réservoirs destinés à contenir une phase continue pourront être connectés au(x) système(s) de génération d'un train de gouttes.

Le dispositif selon l'invention sera un dispositif millifluidique. En effet, l'utilisation d'une telle échelle présente un certain nombre d'avantages.
- L'augmentation de la dimension interne des canaux diminue leur résistance hydraulique et donc la différence de pression nécessaire pour mettre en mouvement un train de gouttes.
- La durée de vie des espaceurs est plus longue et un train de gouttes peut donc être incubé sans coalescence plus longtemps.
- La pression hydraulique locale dans le train est plus homogène et la fluctuation temporelle du volume des espaceurs est donc plus faible.
- Les trains de goutte sont plus stables à débit constant et des trains de gouttes plus longs peuvent être manipulés.
- Le débit peut être augmenté sans déstabilisation du train de gouttes afin d'augmenter la fréquence des transferts de matière.
- Plus la dimension interne des canaux est grande et plus le train de gouttes réagit rapidement à une variation de pression, c'est-à-dire qu'une onde de pression se propage d'autant mieux et est d'autant moins dissipée que la résistance des canaux à l'écoulement est faible.
- Des gouttes plus volumineuses peuvent être manipulées, leur taille minimale étant du même ordre de grandeur que le diamètre du canal afin qu'elles soient confinées. Cela permet d'être plus proche des volumes standards utilisés en microbiologie. Le canal de transfert présentant nécessairement un volume minimal de transfert, l'augmentation de la taille des gouttes permet d'augmenter la gamme des ratios possibles de dilution.

### 3. Utilisation de la méthode selon l'invention

La méthode selon l'invention permet de transférer un échantillon de n'importe quelle goutte choisie d'un train de gouttes vers n'importe quelle autre goutte choisie d'un autre train de gouttes (ou le même train de gouttes). Elle permet donc de réaliser précisément les deux opérations élémentaires de pipetage (prélever et ajouter) permettant toutes les opérations usuelles de manipulation d'échantillons en laboratoire.

Les gouttes des trains de gouttes peuvent donc avoir deux rôles distincts : un rôle de microréacteur ou un rôle de réservoir à réactifs chimiques/biologiques constituant une source de matière première pour les gouttes de type microréacteur.

La méthode selon la présente invention pourra ainsi être utilisée pour la préparation d'échantillons biologiques ou chimiques, la mise en œuvre de réactions biologiques ou chimiques, le criblage de molécules d'origine synthétique ou biologique, ou le criblage ou la culture de microorganismes tels que des bactéries.

En effet, les opérations de transfert effectuer dans le cadre de la méthode selon la présente invention peuvent permettre la préparation d'échantillons chimiques ou biologiques en diluant dans chaque goutte « fille » de la matière issue d'une ou plusieurs gouttes « mères » constituant le train de gouttes originel [étapes d'initiation ou de conditionnement d'une expérience], ainsi que lier deux étapes d'une suite chimique (cinétique, suite réactionnelle) ou biologique (chémostat, sélection, conditions oscillantes) [étapes de transmission].

En outre, la méthode selon la présente invention permet de tester de nombreuses conditions différentes et est pour cela clairement adaptée à la mise en œuvre de criblages. Par exemple, à partir d'un train de gouttes homogène généré automatiquement, nous pourrons y transférer les composés chimiques souhaités issus des gouttes du deuxième train de gouttes, ainsi que des échantillons biologiques issus des gouttes d'un troisième train de gouttes. En analysant leurs croissances, il sera possible de distinguer les réponses des différentes cultures aux différentes conditions testées et donc de les cribler.

La présente invention est illustrée par les exemples non limitatifs ci-dessous.

### EXEMPLES

### 1. Structure et fabrication d'un bloc de transfert

Structure : le bloc de transfert est ici un bloc parallélépipédique, optiquement transparent, contenant deux larges cavités cylindriques et parallèles qui maintiennent les tuyaux transportant les trains de gouttes. Au centre du bloc, les deux cavités cylindriques sont connectées par un canal étroit. De plus, le canal étroit (canal de transfert) peut être fermé / ré-ouvert par application d'une pression pneumatique. Ce bloc de transfert est représenté schématiquement sur la Figure 4A. Une photographie de ce bloc de transfert est représentée sur la Figure 4B.

Fabrication : Pour préparer un bloc de transfert avec une telle structure, une solution de polydiméthylsiloxane (PDMS) et d'agent de polymérisation est coulée dans un moule au design approprié.

***Construction du moule :***
1. Deux tuyaux larges en polymère fluoré sont disposés.
2. Ces tuyaux sont percés d'un petit trou à leur surface en leur milieu.
3. Ces deux tuyaux sont positionnés à l'horizontal et parallèlement entre eux de manière à ce que leurs trous soient l'un en face de l'autre. L'angle entre le rayon d'un tuyau passant par un de ces trous et la verticale est de 45°. Les tuyaux sont distants de 3mm
4. Un petit morceau de fil métallique (75µm de diamètre) est positionné au travers des deux tuyaux, avec les extrémités du fil pénétrant dans les trous formés à la surface des deux tuyaux.
5. Le fil est maintenu en position avec de la colle introduite par les différentes ouvertures des tuyaux (extrémités comme le trou central).
6. Au niveau du centre du fil, deux câbles métalliques cylindriques (1.4mm de diamètre) y sont positionnés de chaque côté, parallèlement et de manière équidistante des deux tuyaux, de manière à ce que les extrémités des deux câbles encadrent. Une petite distance d'environ 80 µm est maintenue entre le fil et les extrémités planes des câbles de chaque côté.

Ceci finalise le design du moule.

*Fabrication du bloc de transfert à partir du moule* :
7. Pour remplir ce moule, des solutions de polymérisation douce (avec un ratio 10:0,2 d'agent de polymérisation par rapport au PDMS) et forte (avec un ratio 10:1,75 d'agent de polymérisation par rapport au PDMS) sont préparées.
8. Premièrement, la solution douce de polymérisation est appliquée autour du fil et des extrémités des câbles qui l'encadrent, et réticulée à 65°C pendant 2h.
9. Deuxièmement, le moule est intégralement rempli de la solution forte de polymérisation et réticulée une nuit entière.
10. Finalement, après réticulation totale du polymère, les deux larges tuyaux, le fil et les câbles sont retirés doucement de l'élément solidifié pour obtenir un bloc de transfert pour un système à deux tuyaux.

### 2. Exemple de dispositif selon l'invention

Un exemple de dispositif selon l'invention comprend les éléments détaillés ci-dessous (les principaux éléments de ce dispositif sont schématisés sur la Figure 2).

Système fluidique : Deux longs tuyaux indépendants (chacun de 10 m de longueur et 2,2 mm de diamètre interne) sont enroulés et disposés en parallèle l'un de l'autre, avec leurs extrémités connectées à quatre réservoirs d'huile contrôlés indépendamment par pression pour imposer un flux de liquide dans les deux tuyaux dans les deux directions.

Contrôle fluidique : Les électrovannes sont ajoutées entre les réservoirs d'huile et les extrémités des tuyaux pour réguler l'écoulement des fluides.

Train de gouttes : Les trains de gouttes sont créés dans les deux tuyaux, à l'aide d'une jonction millifluidique X où sont introduits une phase aqueuse, une phase d'air et une phase d'huile par trois de ses trois ports, et qui génèrent un train de gouttes dans le quatrième port connecté à un tuyau. Dans un train de gouttes, les phases d'eau et d'air sont alternativement dispersées dans la phase continue d'huile.

Bloc de transfert : Pour permettre le transfert de fluide entre les deux tuyaux parallèles, un petit trou (800µm dia) est percé dans la surface des deux tuyaux. Les tuyaux sont alors insérés dans les grands trous parallèles du bloc de transfert, de manière à ce que les deux trous des tuyaux soient alignés sur les deux extrémités du canal de transfert pour établir la communication fluidique entre les deux tuyaux. De plus, deux tuyaux sont connectés aux deux trous sur les côtés du bloc de transfert pour le pincement du canal de transfert via l'application d'une pression pneumatique.

Système optique : L'identification individuelle des gouttes est nécessaire pour permettre la sélection des gouttes ciblées pour le transfert par le canal de transfert. Pour le permettre, une image continue du bloc de transfert est analysée en utilisant une caméra monochrome, une source lumineuse uniforme et un miroir. Une technique d'analyse d'image en temps réel est développée pour identifier les gouttes individuellement. De plus, des détecteurs fluorescents peuvent être montés sur les deux tuyaux pour lire et enregistre la croissance de bactéries fluorescentes.

Identification des gouttes : Deux techniques différentes peuvent être mises en œuvre pour l'identification des gouttes : (1) par ligne de détection ou (2) par reconnaissance de forme.

(1) *Ligne de détection* : Dans cette technique, la réfraction des gouttes d'eau sur le côté du tuyau est utilisée pour détecter sa présence. En pratique, le niveau de gris d'une ligne mono-pixel est évaluée suivant le coté du tuyau. Les bas niveaux de gris indiquent ainsi la présence d'une goutte (Figure 5A).

Ce signal peut être digitalisé en supprimant toutes les valeurs de niveau de gris ne correspondant pas à une goutte d'eau (Figure 5B). Le mouvement des gouttes peut être suivi en comparant les images successives (Figures 5B et 5C).

(2) *Reconnaissance de forme* : Cette technique est adaptée aux tuyaux totalement recouverts de PDMS dans le bloc de transfert et comprend deux étapes :
1. Identification de tous les objets dispersés par leur contour ;
2. Comparaison d'une coupe verticale des objets identifies à une coupe de référence correspondant à celle d'une goutte pour détecter les gouttes d'eau.

### 3. Mise en œuvre d'un transfert de matière par une méthode selon l'invention

Le dispositif de l'exemple 2 a été utilisé pour transférer de la matière d'une goutte d'un premier train de gouttes vers une goutte d'un deuxième train de gouttes selon les étapes suivantes :
1. Les gouttes sont positionnées et arrêtées (en maintenant un gradient de pression entre les deux tuyaux).

Les gouttes cibles sont amenées à chacune des extrémités du canal de transfert en appliquant une pression dans un sens (de la gauche sur la Figure 6). La goutte cible est stoppée en appliquant une pression contraire (de la droite) ajustée en accord avec la position de la goutte par rapport au canal de transfert.

2. Une fois les gouttes donneuse et receveuse positionnées, le canal de transfert est ouvert en relâchant la pression qui lui était appliquée.

3. Le transfert est stoppé en refermant le canal de transfert en réappliquant la pression.

La Figure 6 représente un tel transfert de matière d'une goutte donneuse (goutte n°7 du tuyau du bas - « donor tube ») vers une goutte receveuse (goutte n°6 du tuyau du haut - « recipient tube »), les gouttes étant identifiées par reconnaissance de forme. Elle présente des photographies chronologiques de la zone du dispositif autour du canal de transfert correspondant aux phases suivantes :
1. Canal de transfert fermé, gouttes donneuse et receveuse placées en position à chaque extrémité du canal de transfert ;
2. Canal de transfert ouvert ;
3. Écoulement de matière de la goutte donneuse dans le canal de transfert qui est partiellement rempli ;
4. Poursuite de l'écoulement : le canal de transfert est rempli mais la goutte receveuse n'est pas encore en contact avec l'écoulement ;
5. Ajout de la matière de l'écoulement dans la goutte receveuse ;
6. Transfert terminé : le canal de transfert va être refermé.

### 4. Incubation par transferts en série de culture de bactéries

160 cultures de *Pseudomonas fluorescens* ont été maintenues en phase de croissance à 28°C pendant 3 jours comme détaillé ci-après, à l'aide du dispositif présenté en exemple 2, et en appliquant le protocole de transfert de l'exemple 3 à l'aide du module de transfert de l'exemple 1 lors des transferts de matière d'un train de gouttes à un autre.

Ces bactéries ont été sélectionnées pour cet exemple du fait qu'elles sont fluorescentes (YFP - protéine fluorescente jaune pour « Yellow Fluorescent Protein » en anglais) et permettent de suivre leur croissance au cours de l'expérience en mesurant l'émission de fluorescence reçu par un photomultiplicateur.

Dans le cadre de cette expérience, un premier train de gouttes (bioréacteurs de 30µL) a été initialement généré à partir d'une plaque de culture de 384 puits dont chaque puits contient soit de l'eau milli-Q^{®} (eau mQ), soit un milieu de culture (solution aqueuse de M9x5 à 11,28g/L, caesaminoacide à 1g/L, sulfate de magnésium à 0,24g/L, glucose à 3,6g/L et IPTG à 0,24g/L) contenant des bactéries dans l'une des trois gammes de concentration suivantes : proche de la saturation avec 5.10⁶ bactéries/goutte ; dilution faible avec 5.10⁵ bactéries/goutte ; forte dilution avec <10³ bactéries/goutte. Ce premier train de gouttes a été généré à partir de la plaque de culture et est composé de 16 gouttes d'eau mQ, puis de 160 gouttes contenant des bactéries puis de 16 gouttes d'eau mQ.

Ce premier train de gouttes a été incubé pendant 6h en le maintenant en mouvement constant dans le tuyau d'incubation et en mesurant le signal de fluorescence YFP de ces gouttes à chaque passage. La Figure 11 présente les courbes de croissance observées durant cette phase. Après cette première phase de croissance de 6h, un deuxième train de gouttes (constitué de 16 gouttes d'eau, puis 160 gouttes du même milieu de culture stérile, et de 16 gouttes d'eau, chaque goutte étant séparée des autres par une bulle d'air de 10µL et par de l'huile fluorée) a été généré et 1µL de chaque goutte du premier train de gouttes a été transféré à l'aide du module de transfert dont la réalisation est décrite dans l'exemple 1 dans une goutte du deuxième train de gouttes, puis le premier train de gouttes a été éliminé.

Ce deuxième train de gouttes a été incubé dans les mêmes conditions que le train précédent pendant 8h. La Figure 12 présente les courbes de croissance observées durant cette phase. Après cette deuxième phase de croissance de 8h, un troisième train de gouttes a été généré de la même manière que le deuxième train de gouttes et 1µL de chaque goutte du deuxième train de gouttes a été transféré à l'aide du même module de transfert dans une goutte du troisième train de gouttes, puis le deuxième train de gouttes a été éliminé.

Ce deuxième train de gouttes a été incubé dans les mêmes conditions que le train précédent pendant 8h. La Figure 13 présente les courbes de croissance observées durant cette troisième phase de croissance.

La Figure 4 schématise cet exemple et représente l'évolution des courbes de croissance de cinq bioréacteurs (issus respectivement des puits E2, E4, G4, H3, G6 de la plaque multi-puits lors de la formation du premier train de gouttes) ayant une dilution faible en bactéries initialement (5.10⁵ bactéries) au cours des trois phases d'incubation successives. Cet exemple illustre clairement que la méthode selon l'invention permet la culture bactérienne.

## Revendications

1. Méthode de transfert de matière entre deux gouttes dans un dispositif millifluidique comprenant :
- un premier canal millifluidique et un deuxième canal millifluidique,
- un canal de transfert reliant le premier canal au deuxième canal, et
- un système de fermeture et d'ouverture permettant de contrôler l'ouverture et la fermeture du canal de transfert et qui comprend une position ouverte et une position fermée,
ladite méthode comprenant les étapes suivantes :
(a) mettre le système de fermeture et d'ouverture du canal de transfert en position fermée si celui-ci est en position ouverte ;
(b) générer, dans le premier canal millifluidique, un premier train de gouttes comprenant une phase continue, au moins deux gouttes et éventuellement au moins un espaceur entre deux gouttes successives Aₙ et Aₙ₊₁ où n ≥ 1 ;
(c) générer, dans le deuxième canal millifluidique, un deuxième train de gouttes comprenant une phase continue, au moins deux gouttes et éventuellement au moins un espaceur entre deux gouttes successives Bₘ et Bₘ₊₁ où m ≥ 1 ;
(d) positionner une goutte Aₙ du premier train de gouttes en face de la jonction entre le canal de transfert et le premier canal ;
(e) positionner une goutte Bₘ du deuxième train de gouttes en face de la jonction entre le canal de transfert et le deuxième canal ;
(f) mettre le système de fermeture et d'ouverture du canal de transfert en position ouverte de manière à permettre :
le transfert d'au moins une partie de la goutte Aₙ du premier train de gouttes dans la goutte Bₘ du deuxième train de gouttes, ou
le transfert d'au moins une partie de la goutte Bₘ du deuxième train de gouttes dans la goutte Aₙ du premier train de gouttes,
avant de remettre le système de fermeture et d'ouverture du canal de transfert en position fermée ;
(g) éventuellement réitérer les étapes (d) à (f) une ou plusieurs fois avec la même goutte Aₙ ou une goutte différente du premier train de gouttes et avec la même goutte Bₘ ou une goutte différente du deuxième train de gouttes ;
dans laquelle l'étape (f) est mise en œuvre après les étapes (d) et (e) de sorte que le système de fermeture et d'ouverture du canal de transfert est mis en position ouverte une fois que les gouttes Aₙ et Bₘ sont positionnées respectivement aux deux extrémités du canal de transfert et permet le passage de matière directement entre les gouttes Aₙ et Bₘ via le canal de transfert,
ou
dans laquelle :
(i) le canal de transfert comporte un deuxième système de fermeture et d'ouverture, le premier système de fermeture et d'ouverture étant plus proche de la connexion du canal de transfert au premier canal millifluidique que le deuxième système de fermeture et d'ouverture, et donc le deuxième système de fermeture et d'ouverture est plus proche de la connexion du canal de transfert au deuxième canal millifluidique que le premier système de fermeture et d'ouverture, les deux systèmes de fermeture et d'ouverture étant mis en position fermée à l'étape (a), ou
(ii) le système de fermeture et d'ouverture du canal de transfert comporte une deuxième position ouverte de sorte que :
sa position fermée empêche tout passage de matière dans le canal de transfert de part et d'autre du système de fermeture et d'ouverture,
sa première position ouverte permet le transfert de matière du premier canal millifluidique vers le canal de transfert ou inversement du canal de transfert vers le premier canal millifluidique,
sa deuxième position ouverte permet le transfert de matière du deuxième canal millifluidique vers le canal de transfert ou inversement du canal de
transfert vers le deuxième canal millifluidique, et
dans laquelle l'étape (f) comprend les sous-étapes successives suivantes :
(f1) mettre le premier système de fermeture et d'ouverture du canal de transfert en position ouverte dans le cas (i) ou le système de fermeture et d'ouverture du canal de transfert dans sa première position ouverte dans le cas (ii) de sorte à permettre le transfert d'au moins une partie de la goutte Aₙ du premier train de gouttes dans le canal de transfert, puis remettre ledit système de fermeture et d'ouverture du canal de transfert en position fermée,
(f2) mettre le deuxième système de fermeture et d'ouverture du canal de transfert en position ouverte dans le cas (i) ou le système de fermeture et d'ouverture du canal de transfert dans sa deuxième position ouverte dans le cas (ii) de sorte à permettre le transfert de la matière issue de la goutte Aₙ du premier train de gouttes qui est présente dans le canal de transfert vers la goutte Bₘ du deuxième train de gouttes, puis remettre ledit système de fermeture et d'ouverture du canal de transfert en position fermée ;
ou
(f'1) mettre le deuxième système de fermeture et d'ouverture du canal de transfert en position ouverte dans le cas (i) ou le système de fermeture et d'ouverture du canal de transfert dans sa deuxième position ouverte dans le cas (ii) de sorte à permettre le transfert d'au moins une partie de la goutte Bₘ du deuxième train de gouttes dans le canal de transfert, puis remettre ledit système de fermeture et d'ouverture du canal de transfert en position fermée ;
(f'2) mettre le premier système de fermeture et d'ouverture du canal de transfert en position ouverte dans le cas (i) ou le système de fermeture et d'ouverture du canal de transfert dans sa première position ouverte dans le cas (ii) de sorte à permettre le transfert de la matière issue de la goutte Bₘ du deuxième train de gouttes qui est présente dans le canal de transfert vers la goutte Aₙ du premier train de gouttes, puis remettre ledit système de fermeture et d'ouverture du canal de transfert en position fermée,
les étapes (f1) et (f'2) étant mises en œuvre après l'étape (d) et les étapes (f2) et (f'1) étant mises en œuvre après l'étape (e).

2. Méthode selon la revendication 1, dans laquelle l'étape (f) est mise en œuvre après les étapes (d) et (e) de sorte que le système de fermeture et d'ouverture du canal de transfert est mis en position ouverte une fois que les gouttes Aₙ et Bₘ sont positionnées respectivement aux deux extrémités du canal de transfert et permet le passage de matière directement entre les gouttes Aₙ et Bₘ via le canal de transfert.

3. Méthode selon la revendication 2, dans laquelle, lors de l'étape (f), la pression dans le premier canal et/ou le deuxième canal est ajustée de sorte à ce que :
- la pression soit plus élevée dans le premier canal par rapport à la pression dans le deuxième canal pour permettre le transfert d'au moins une partie de la goutte Aₙ du premier train de gouttes dans la goutte Bₘ du deuxième train de gouttes ; ou
- la pression soit plus élevée dans le deuxième canal par rapport à la pression dans le premier canal pour permettre le transfert d'au moins une partie de la goutte Bₘ du deuxième train de gouttes dans la goutte Aₙ du premier train de gouttes.

4. Méthode selon la revendication 1, dans laquelle :
(i) le canal de transfert comporte un deuxième système de fermeture et d'ouverture, le premier système de fermeture et d'ouverture étant plus proche de la connexion du canal de transfert au premier canal millifluidique que le deuxième système de fermeture et d'ouverture, et donc le deuxième système de fermeture et d'ouverture est plus proche de la connexion du canal de transfert au deuxième canal millifluidique que le premier système de fermeture et d'ouverture, les deux systèmes de fermeture et d'ouverture étant mis en position fermée à l'étape (a), ou
(ii) le système de fermeture et d'ouverture du canal de transfert comporte une deuxième position ouverte de sorte que :
sa position fermée empêche tout passage de matière dans le canal de transfert de part et d'autre du système de fermeture et d'ouverture,
sa première position ouverte permet le transfert de matière du premier canal millifluidique vers le canal de transfert ou inversement du canal de transfert vers le premier canal millifluidique,
sa deuxième position ouverte permet le transfert de matière du deuxième canal millifluidique vers le canal de transfert ou inversement du canal de
transfert vers le deuxième canal millifluidique, et
dans laquelle l'étape (f) comprend les sous-étapes successives suivantes :
(f1) mettre le premier système de fermeture et d'ouverture du canal de transfert en position ouverte dans le cas (i) ou le système de fermeture et d'ouverture du canal de transfert dans sa première position ouverte dans le cas (ii) de sorte à permettre le transfert d'au moins une partie de la goutte Aₙ du premier train de gouttes dans le canal de transfert, puis remettre ledit système de fermeture et d'ouverture du canal de transfert en position fermée,
(f2) mettre le deuxième système de fermeture et d'ouverture du canal de transfert en position ouverte dans le cas (i) ou le système de fermeture et d'ouverture du canal de transfert dans sa deuxième position ouverte dans le cas (ii) de sorte à permettre le transfert de la matière issue de la goutte Aₙ du premier train de gouttes qui est présente dans le canal de transfert vers la goutte Bₘ du deuxième train de gouttes, puis remettre ledit système de fermeture et d'ouverture du canal de transfert en position fermée ;
ou
(f'1) mettre le deuxième système de fermeture et d'ouverture du canal de transfert en position ouverte dans le cas (i) ou le système de fermeture et d'ouverture du canal de transfert dans sa deuxième position ouverte dans le cas (ii) de sorte à permettre le transfert d'au moins une partie de la goutte Bₘ du deuxième train de gouttes dans le canal de transfert, puis remettre ledit système de fermeture et d'ouverture du canal de transfert en position fermée ;
(f'2) mettre le premier système de fermeture et d'ouverture du canal de transfert en position ouverte dans le cas (i) ou le système de fermeture et d'ouverture du canal de transfert dans sa première position ouverte dans le cas (ii) de sorte à permettre le transfert de la matière issue de la goutte Bₘ du deuxième train de gouttes qui est présente dans le canal de transfert vers la goutte Aₙ du premier train de gouttes, puis remettre ledit système de fermeture et d'ouverture du canal de transfert en position fermée,
les étapes (f1) et (f'2) étant mises en œuvre après l'étape (d) et les étapes (f2) et (f'1) étant mises en œuvre après l'étape (e).

5. Méthode selon la revendication 4, dans laquelle le canal de transfert est connecté en outre à un canal de succion et à un canal d'addition, et
dans laquelle la pression est ajustée dans les différents canaux comme suit :
- lors de l'étape (f1) ou (f'1), la pression est plus élevée dans le canal donneur par rapport à la pression dans le canal de succion, le canal donneur étant le premier canal millifluidique dans le cadre de l'étape (f1) et le deuxième canal millifluidique dans le cadre de l'étape (f'1) ; puis
- lors de l'étape (f2) ou (f'2), la pression est plus élevée dans le canal d'addition par rapport à la pression dans le canal receveur, le canal receveur étant le deuxième canal millifluidique dans le cadre de l'étape (f2) et le premier canal millifluidique dans le cadre de l'étape (f'2).

6. Méthode selon l'une quelconque des revendications 1 à 5, dans laquelle le dispositif millifluidique comprend en outre un système de détection des gouttes tel qu'un système optique, et avantageusement est automatisé.

7. Méthode selon l'une quelconque des revendications 1 à 6, dans laquelle le système de fermeture et d'ouverture du canal de transfert est une vanne à barillet, une vanne translationnelle, une vanne à pincement telle qu'une vanne à pincement mécanique ou une vanne à pincement pneumatique, ou une vanne solénoïde.

8. Méthode selon l'une quelconque des revendications 1 à 7, dans laquelle la phase continue est une huile minérale ou fluorée ; la phase constituant les gouttes comprend une solution aqueuse ; la phase constituant le ou les éventuels espaceurs est un gaz tel que de l'air ; ou un liquide immiscible à la phase continue et à la phase constituant les gouttes à espacer, tel qu'une huile minérale ou une huile de silicone.

9. Méthode selon l'une quelconque des revendications 1 à 8, dans laquelle :
le premier canal a une dimension interne D₁, où D₁ représente le diamètre interne du premier canal dans une géométrie cylindrique ou la hauteur ou largeur interne du premier canal dans une géométrie parallélépipédique ;
le deuxième canal a un dimension interne D₂, où D₂ représente le diamètre interne du deuxième canal dans une géométrie cylindrique ou la hauteur ou largeur interne du deuxième canal dans une géométrie parallélépipédique ; et
D₁ et D₂ sont indépendamment compris entre 10 µm et 3 mm, notamment compris entre 500 µm et 2,5 mm, avantageusement compris entre 1,5 mm et 2,2 mm.

10. Méthode selon la revendication 9, dans laquelle le canal de transfert a une dimension interne d, où d représente le diamètre interne du canal de transfert dans une géométrie cylindrique ou la hauteur ou largeur interne du canal de transfert dans une géométrie parallélépipédique ;
D représente la plus petite valeur entre D₁ et D₂ ; et
le rapport d/D est compris entre 0,001 et 1, notamment compris entre 0,01 et 0,2,
avantageusement compris entre 0,02 et 0,1.

11. Méthode selon l'une quelconque des revendications 1 à 10, comprenant les étapes additionnelles suivantes :
(h) éliminer le premier train de gouttes du premier canal millifluidique ou le deuxième train de gouttes du deuxième canal millifluidique ;
(i) générer, dans le canal millifluidique libéré à l'étape (h), un troisième train de gouttes comprenant une phase continue, au moins deux gouttes et éventuellement au moins un espaceur entre deux gouttes successives Cₚ et Cₚ₊₁ où p ≥ 1 ;
(j) mettre en œuvre les étapes (d) à (g), le troisième train de gouttes remplaçant le premier train de gouttes ou le deuxième train de gouttes éliminé à l'étape (h) ;
(k) éventuellement réitérer les étapes (h) à (j) une ou plusieurs fois.

12. Utilisation de la méthode selon l'une quelconque des revendications 1 à 11, pour la préparation d'échantillons biologiques ou chimiques, la mise en œuvre de réactions biologiques ou chimiques, le criblage de molécule d'origine synthétique ou biologique, ou le criblage ou la culture de microorganismes.

13. Dispositif millifluidique comprenant :
- un premier canal millifluidique comprenant une entrée E1 et une sortie S1 ;
- un deuxième canal millifluidique comprenant une entrée E2 et une sortie S2 ;
- un canal de transfert reliant le premier canal millifluidique au deuxième canal millifluidique ;
- un système de fermeture et d'ouverture permettant de contrôler l'ouverture et la fermeture du canal de transfert ;
- un système de génération d'un train de gouttes connecté à la fois à l'entrée E1 du premier canal et à l'entrée E2 du deuxième canal ou deux systèmes de génération d'un train de gouttes connectés respectivement à l'entrée E1 du premier canal et à l'entrée E2 du deuxième canal ;
- un système de contrôle de la pression dans le premier canal millifluidique et dans le deuxième canal millifluidique ;
- un système de détection des gouttes tel qu'un système optique.

14. Dispositif selon la revendication 13, dans lequel le système de fermeture et d'ouverture du canal de transfert est une vanne à barillet, une vanne translationnelle, une vanne à pincement telle qu'une vanne à pincement mécanique ou une vanne à pincement pneumatique, ou une vanne solénoïde.

15. Dispositif selon l'une quelconque des revendications 13 et 14, comprenant en outre au moins un deuxième canal de transfert reliant le premier canal au deuxième canal et un deuxième système de fermeture et d'ouverture permettant de contrôler l'ouverture et la fermeture du deuxième canal de transfert.

## Patentansprüche

1. Verfahren zur Übertragung von Material zwischen zwei Tropfen in einer millifluidischen Vorrichtung, umfassend:
- einen ersten millifluidischen Kanal und einen zweiten millifluidischen Kanal,
- einen Übertragungskanal, der den ersten Kanal mit dem zweiten Kanal verbindet, und
- ein Schließ- und Öffnungssystem, das ein Steuern des Öffnens und des Schließens des Übertragungskanals ermöglicht und das eine geöffnete Position und eine geschlossene Position umfasst,
wobei das Verfahren die folgenden Schritte umfasst:
(a) Versetzen des Schließ- und Öffnungssystems für den Übertragungskanal in die geschlossene Position, wenn es sich in der geöffneten Position befindet;
(b) Erzeugen eines ersten Stroms von Tropfen, umfassend eine kontinuierliche Phase, mindestens zwei Tropfen und eventuell mindestens einen Abstandhalter zwischen zwei sukzessiven Tropfen Aₙ und Aₙ₊₁, wobei n ≥ 1, in dem ersten millifluidischen Kanal;
(c) Erzeugen eines zweiten Stroms von Tropfen, umfassend eine kontinuierliche Phase, mindestens zwei Tropfen und eventuell mindestens einen Abstandhalter zwischen zwei sukzessiven Tropfen Bₘ und Bₘ₊₁, wobei m ≥ 1, in dem zweiten millifluidischen Kanal;
(d) Positionieren eines Tropfens Aₙ des ersten Stroms von Tropfen gegenüber der Verbindungsstelle zwischen dem Übertragungskanal und dem ersten Kanal;
(e) Positionieren eines Tropfens Bₘ des zweiten Stroms von Tropfen gegenüber der Verbindungsstelle zwischen dem Übertragungskanal und dem zweiten Kanal;
(f) Versetzen des Schließ- und Öffnungssystems für den Übertragungskanal in die geöffnete Position, um zu ermöglichen:
die Übertragung von mindestens einem Teil des Tropfens Aₙ des ersten Stroms von Tropfen in den Tropfen Bₘ des zweiten Stroms von Tropfen oder
die Übertragung von mindestens einem Teil des Tropfens Bₘ des zweiten Stroms von Tropfen in den Tropfen Aₙ des ersten Stroms von Tropfen,
bevor das Schließ- und Öffnungssystem für den Übertragungskanal erneut in die geschlossene Position versetzt wird;
(g) eventuell Wiederholen der Schritte (d) bis (f) ein oder mehrere Male mit demselben Tropfen Aₙ oder einem anderen Tropfen des ersten Stroms von Tropfen und mit demselben Tropfen Bₘ oder einem anderen Tropfen des zweiten Stroms von Tropfen;
wobei der Schritt (f) nach den Schritten (d) und (e) durchgeführt wird, so dass das Schließ- und Öffnungssystem für den Übertragungskanal in die geöffnete Position versetzt wird, sobald die Tropfen Aₙ und Bₘ jeweils in zwei Enden des Übertragungskanals positioniert sind, und den Durchtritt von Material direkt zwischen den Tropfen Aₙ und Bₘ mittels dem Übertragungskanal ermöglicht,
oder
wobei:
(i) der Übertragungskanal ein zweites Schließ- und Öffnungssystem umfasst, wobei das erste Schließ- und Öffnungssystem näher zu der Verbindung des Übertragungskanals mit dem ersten millifluidischen Kanal als das zweite Schließ- und Öffnungssystem ist, und somit das zweite Schließ- und Öffnungssystem näher zu der Verbindung des Übertragungskanals mit dem zweiten millifluidischen Kanal als das erste Schließ- und Öffnungssystem ist, wobei die zwei Schließ- und Öffnungssysteme im Schritt (a) in die geschlossene Position versetzt werden, oder
(ii) das Schließ- und Öffnungssystem für den Übertragungskanal eine zweite geöffnete Position umfasst, so dass:
seine geschlossene Position jeglichen Durchtritt von Material in dem Übertragungskanal auf beiden Seiten des Schließ- und Öffnungssystems verhindert,
seine erste geöffnete Position die Übertragung von Material von dem ersten millifluidischen Kanal zu dem Übertragungskanal oder umgekehrt von dem Übertragungskanal zu dem ersten millifluidischen Kanal ermöglicht,
seine zweite geöffnete Position die Übertragung von Material von dem zweiten millifluidischen Kanal zu dem Übertragungskanal oder umgekehrt von dem Übertragungskanal zu dem zweiten millifluidischen Kanal ermöglicht, und
wobei der Schritt (f) die folgenden sukzessiven Unterschritte umfasst:
(f1) Versetzen des ersten Schließ- und Öffnungssystems für den Übertragungskanal in die geöffnete Position im Fall (i) oder des Schließ- und Öffnungssystems für den Übertragungskanal in seine erste geöffnete Position im Fall (ii), so dass die Übertragung von mindestens einem Teil des Tropfens Aₙ des ersten Stroms von Tropfen in dem Übertragungskanal ermöglicht wird, dann erneutes Versetzen des Schließ- und Öffnungssystems für den Übertragungskanal in die geschlossene Position,
(f2) Versetzen des zweiten Schließ- und Öffnungssystems für den Übertragungskanal in die geöffnete Position im Fall (i) oder des Schließ- und Öffnungssystems für den Übertragungskanal in seine zweite geöffnete Position im Fall (ii), so dass die Übertragung des Materials, das von dem Tropfen Aₙ des ersten Stroms von Tropfen hervorgeht, der in dem Übertragungskanal vorliegt, zu dem Tropfen Bₘ des zweiten Stroms von Tropfen ermöglicht wird, dann erneutes Versetzen des Schließ- und Öffnungssystems für den Übertragungskanal in die geschlossene Position;
oder
(f'1) Versetzen des zweiten Schließ- und Öffnungssystems für den Übertragungskanal in die geöffnete Position im Fall (i) oder des Schließ- und Öffnungssystems für den Übertragungskanal in seine zweite geöffnete Position im Fall (ii), so dass die Übertragung von mindestens einem Teil des Tropfens Bₘ des zweiten Stroms von Tropfen in dem Übertragungskanal ermöglicht wird, dann erneutes Versetzen des Schließ-und Öffnungssystems für den Übertragungskanal in die geschlossene Position;
(f'2) Versetzen des ersten Schließ- und Öffnungssystems für den Übertragungskanal in die geöffnete Position im Fall (i) oder des Schließ- und Öffnungssystems für den Übertragungskanal in seine erste geöffnete Position im Fall (ii), so dass die Übertragung des Materials, das von dem Tropfen Bₘ des zweiten Stroms von Tropfen hervorgeht, der in dem Übertragungskanal vorliegt, zu dem Tropfen Aₙ des ersten Stroms von Tropfen ermöglicht wird, dann erneutes Versetzen des Schließ-und Öffnungssystems für den Übertragungskanal in die geschlossene Position,
wobei die Schritte (f1) und (f'2) nach dem Schritt (d) durchgeführt werden und die Schritte (f2) und (f'1) nach dem Schritt (e) durchgeführt werden.

2. Verfahren nach Anspruch 1, wobei der Schritt (f) nach den Schritten (d) und (e) durchgeführt wird, so dass das Schließ- und Öffnungssystem für den Übertragungskanal in die geöffnete Position versetzt wird, sobald die Tropfen Aₙ und Bₘ jeweils in zwei Enden des Übertragungskanals positioniert sind, und den Durchtritt von Material direkt zwischen den Tropfen Aₙ und Bₘ mittels dem Übertragungskanal ermöglicht.

3. Verfahren nach Anspruch 2, wobei während des Schritts (f) der Druck in dem ersten Kanal und/oder dem zweiten Kanal so eingestellt wird, dass:
- der Druck in dem ersten Kanal in Bezug auf den Druck in dem zweiten Kanal höher ist, um die Übertragung von mindestens einem Teil des Tropfens Aₙ des ersten Stroms von Tropfen zu dem Tropfen Bₘ des zweiten Stroms von Tropfen zu ermöglichen; oder
- der Druck in dem zweiten Kanal in Bezug auf den Druck in dem ersten Kanal höher ist, um die Übertragung von mindestens einem Teil des Tropfens Bₘ des zweiten Stroms von Tropfen zu dem Tropfen Aₙ des ersten Stroms von Tropfen zu ermöglichen.

4. Verfahren nach Anspruch 1, wobei:
(i) der Übertragungskanal ein zweites Schließ- und Öffnungssystem umfasst, wobei das erste Schließ- und Öffnungssystem näher zu der Verbindung des Übertragungskanals mit dem ersten millifluidischen Kanal als das zweite Schließ- und Öffnungssystem ist und somit das zweite Schließ- und Öffnungssystem näher zu der Verbindung des Übertragungskanals mit dem zweiten millifluidischen Kanal als das erste Schließ- und Öffnungssystem ist, wobei die zwei Schließ- und Öffnungssysteme im Schritt (a) in die geschlossene Position versetzt werden, oder
(ii) das Schließ- und Öffnungssystem für den Übertragungskanal eine zweite geöffnete Position umfasst, so dass:
seine geschlossene Position jeglichen Durchtritt von Material in dem Übertragungskanal auf beiden Seiten des Schließ- und Öffnungssystems verhindert,
seine erste geöffnete Position die Übertragung von Material von dem ersten millifluidischen Kanal zu dem Übertragungskanal oder umgekehrt von dem Übertragungskanal zu dem ersten millifluidischen Kanal ermöglicht,
seine zweite geöffnete Position die Übertragung von Material von dem zweiten millifluidischen Kanal zu dem Übertragungskanal oder umgekehrt von dem Übertragungskanal zu dem zweiten millifluidischen Kanal ermöglicht, und
wobei der Schritt (f) die folgenden sukzessiven Unterschritte umfasst:
(f1) Versetzen des ersten Schließ- und Öffnungssystems für den Übertragungskanal in die geöffnete Position im Fall (i) oder des Schließ- und Öffnungssystems für den Übertragungskanal in seine erste geöffnete Position im Fall (ii), so dass die Übertragung von mindestens einem Teil des Tropfens Aₙ des ersten Stroms von Tropfen in dem Übertragungskanal ermöglicht wird, dann erneutes Versetzen des Schließ- und Öffnungssystems für den Übertragungskanal in die geschlossene Position,
(f2) Versetzen des zweiten Schließ- und Öffnungssystems für den Übertragungskanal in die geöffnete Position im Fall (i) oder des Schließ- und Öffnungssystems für den Übertragungskanal in seine zweite geöffnete Position im Fall (ii), so dass die Übertragung des Materials, das von dem Tropfen Aₙ des ersten Stroms von Tropfen hervorgeht, der in dem Übertragungskanal vorliegt, zu dem Tropfen Bₘ des zweiten Stroms von Tropfen ermöglicht wird, dann erneutes Versetzen des Schließ- und Öffnungssystems für den Übertragungskanal in die geschlossene Position;
oder
(f'1) Versetzen des zweiten Schließ- und Öffnungssystems für den Übertragungskanal in die geöffnete Position im Fall (i) oder des Schließ- und Öffnungssystems für den Übertragungskanal in seine zweite geöffnete Position im Fall (ii), so dass die Übertragung von mindestens einem Teil des Tropfens Bₘ des zweiten Stroms von Tropfen in dem Übertragungskanal ermöglicht wird, dann erneutes Versetzen des Schließ-und Öffnungssystems für den Übertragungskanal in die geschlossene Position;
(f'2) Versetzen des ersten Schließ- und Öffnungssystems für den Übertragungskanal in die geöffnete Position im Fall (i) oder des Schließ- und Öffnungssystems für den Übertragungskanal in seine erste geöffnete Position im Fall (ii), so dass die Übertragung des Materials, das von dem Tropfen Bₘ des zweiten Stroms von Tropfen hervorgeht, der in dem Übertragungskanal vorliegt, zu dem Tropfen Aₙ des ersten Stroms von Tropfen ermöglicht wird, dann erneutes Versetzen des Schließ-und Öffnungssystems für den Übertragungskanal in die geschlossene Position,
wobei die Schritte (f1) und (f'2) nach dem Schritt (d) durchgeführt werden und die Schritte (f2) und (f'1) nach dem Schritt (e) durchgeführt werden.

5. Verfahren nach Anspruch 4, wobei der Übertragungskanal ferner mit einem Saugkanal und einem Zugabekanal verbunden ist, und
wobei der Druck in den unterschiedlichen Kanälen eingestellt wird, wie folgt:
- während des Schritts (f1) oder (f'1) ist der Druck in dem Donatorkanal in Bezug auf den Druck in dem Saugkanal höher, wobei der Donatorkanal der erste millifluidische Kanal im Rahmen des Schritts (f1) und der zweite millifluidische Kanal im Rahmen des Schritts (f'1) ist; dann
- während des Schritts (f2) oder (f'2) ist der Druck in dem Zugabekanal in Bezug auf den Druck in dem Empfängerkanal höher, wobei der Empfängerkanal der zweite millifluidische Kanal im Rahmen des Schritts (f2) und der erste millifluidische Kanal im Rahmen des Schritts (f'2) ist.

6. Verfahren nach einem der Ansprüche 1 bis 5, wobei die millifluidische Vorrichtung ferner ein System zur Erkennung von Tropfen, wie ein optisches System, umfasst und vorteilhafterweise automatisiert ist.

7. Verfahren nach einem der Ansprüche 1 bis 6, wobei das Schließ- und Öffnungssystem für den Übertragungskanal ein Zylinderventil, ein Translationsventil, ein Quetschventil, wie ein mechanisches Quetschventil oder ein pneumatisches Quetschventil, oder ein Magnetventil ist.

8. Verfahren nach einem der Ansprüche 1 bis 7, wobei die kontinuierliche Phase ein Mineral- oder fluoriertes Öl ist; wobei die Phase, die die Tropfen bildet, eine wässrige Lösung umfasst; wobei die Phase, die den oder die eventuellen Abstandhalter bildet, ein Gas, wie Luft; oder eine Flüssigkeit, die mit der kontinuierlichen Phase und der Phase, die die zu beabstandeten Tropfen bildet, nicht mischbar ist, wie ein Mineralöl oder ein Silikonöl, ist.

9. Verfahren nach einem der Ansprüche 1 bis 8, wobei:
der erste Kanal eine Innenabmessung D₁ aufweist, wobei D₁ den Innendurchmesser des ersten Kanals in einer zylindrischen Geometrie oder die Innenhöhe oder -breite des ersten Kanals in einer parallelepipedischen Geometrie darstellt;
der zweite Kanal eine Innenabmessung D₂ aufweist, wobei D₂ den Innendurchmesser des zweiten Kanals in einer zylindrischen Geometrie oder die Innenhöhe oder -breite des zweiten Kanals in einer parallelepipedischen Geometrie darstellt; und
D₁ und D₂ unabhängig zwischen 10 µm und 3 mm liegen, insbesondere zwischen 500 µm und 2,5 mm liegen, vorteilhafterweise zwischen 1,5 mm und 2,2 mm liegen.

10. Verfahren nach Anspruch 9, wobei der Übertragungskanal eine Innenabmessung d aufweist, wobei d den Innendurchmesser des Übertragungskanals in einer zylindrischen Geometrie oder die Innenhöhe oder -breite des Übertragungskanals in einer parallelepipedischen Geometrie darstellt;
D den kleinsten Wert zwischen D₁ und D₂ darstellt; und
das Verhältnis d/D zwischen 0,001 und 1 liegt, insbesondere zwischen 0,01 und 0,2 liegt, vorteilhafterweise zwischen 0,02 und 0,1 liegt.

11. Verfahren nach einem der Ansprüche 1 bis 10, umfassend die folgenden zusätzlichen Schritte:
(h) Entfernen des ersten Stroms von Tropfen des ersten millifluidischen Kanals oder des zweiten Stroms von Tropfen des zweiten millifluidischen Kanals;
(i) Erzeugen eines dritten Stroms von Tropfen, umfassend eine kontinuierliche Phase, mindestens zwei Tropfen und eventuell mindestens einen Abstandhalter zwischen zwei sukzessiven Tropfen Cₚ und Cₚ₊₁, wobei p ≥ 1, in dem im Schritt (h) frei gemachten Kanal;
(j) Durchführen der Schritte (d) bis (g), wobei der dritte Strom von Tropfen den ersten Strom von Tropfen oder den zweiten Strom von Tropfen, der im Schritt (h) entfernt wurde, ersetzt;
(k) eventuell Wiederholen der Schritte (h) bis (j) ein oder mehrere Male.

12. Verwendung des Verfahrens nach einem der Ansprüche 1 bis 11 zum Herstellen von biologischen oder chemischen Proben, Durchführen von biologischen oder chemischen Reaktionen, Screenen eines synthetischen oder biologischen ursprünglichen Moleküls oder Screenen oder Kultivieren von Mikroorganismen.

13. Millifluidische Vorrichtung, umfassend:
- einen ersten millifluidischen Kanal, umfassend einen Einlass E1 und einen Auslass S1;
- einen zweiten millifluidischen Kanal, umfassend einen Einlass E2 und einen Auslass S2;
- einen Übertragungskanal, der den ersten millifluidischen Kanal mit dem zweiten millifluidischen Kanal verbindet;
- ein Schließ- und Öffnungssystem, das ein Steuern des Öffnens und des Schließens des Übertragungskanals ermöglicht;
- ein System zur Erzeugung eines Stroms von Tropfen, das gleichzeitig mit dem Einlass E1 des ersten Kanals und mit dem Einlass E2 des zweiten Kanals verbunden ist, oder zwei Systeme zur Erzeugung eines Stroms von Tropfen, die mit dem Einlass E1 des ersten Kanals bzw. mit dem Einlass E2 des zweiten Kanals verbunden sind;
- ein System zur Steuerung des Drucks in dem ersten millifluidischen Kanal und in dem zweiten millifluidischen Kanal;
- ein System zur Erkennung von Tropfen, wie ein optisches System.

14. Vorrichtung nach Anspruch 13, wobei das Schließ- und Öffnungssystem für den Übertragungskanal ein Zylinderventil, ein Translationsventil, ein Quetschventil, wie ein mechanisches Quetschventil oder ein pneumatisches Quetschventil, oder ein Magnetventil ist.

15. Vorrichtung nach einem der Ansprüche 13 und 14, ferner umfassend mindestens einen zweiten Übertragungskanal, der den ersten Kanal mit dem zweiten Kanal verbindet, und ein zweites Schließ- und Öffnungssystem, das ein Steuern des Öffnens und des Schließens des zweiten Übertragungskanals ermöglicht.

## Claims

1. A method for transfer of material between two drops in a millifluidic device comprising:
- a first millifluidic channel and a second millifluidic channel,
- a transfer channel connecting the first channel to the second channel, and
- a closing and opening system making it possible to control the opening and closing of the transfer channel and which comprises an open position and a closed position,
said method comprising the following steps:
(a) putting the closing and opening system of the transfer channel in the closed position if it is in the open position;
(b) generating, in the first millifluidic channel, a first drop train comprising a continuous phase, at least two drops and optionally at least one spacer between two successive drops Aₙ and Aₙ₊₁ where n ≥ 1;
(c) generating, in the second millifluidic channel, a second drop train comprising a continuous phase, at least two drops and optionally at least one spacer between two successive drops Bₘ and Bₘ₊₁ where m ≥ 1;
(d) positioning a drop Aₙ of the first drop train in front of the junction between the transfer channel and the first channel;
(e) positioning a drop Bₘ of the second drop train in front of the junction between the transfer channel and the second channel;
(f) putting the closing and opening system of the transfer channel in the open position so as to allow:
the transfer of at least a part of the drop Aₙ of the first drop train into the drop Bₘ of the second drop train, or
the transfer of at least a part of the drop Bₘ of the second drop train into the drop Aₙ of the first drop train,
before returning the closing and opening system of the transfer channel to the closed position;
(g) optionally repeating steps (d) to (f) one or more times with the same drop Aₙ or a different drop of the first drop train and with the same drop Bₘ or a different drop of the second drop train;
wherein step (f) is implemented after steps (d) and (e) so that the closing and opening system of the transfer channel is in the open position once the drops Aₙ and Bₘ are positioned, respectively, at both ends of the transfer channel and allows the passage of material directly between the drops Aₙ and Bₘ via the transfer channel,
or
wherein:
(i) the transfer channel comprises a second closing and opening system, the first closing and opening system being closer to the connection of the transfer channel to the first millifluidic channel than the second closing and opening system, and therefore the second closing and opening system is closer to the connection of the transfer channel to the second millifluidic channel than the first closing and opening system, the two closing and opening systems being placed in the closed position in step (a), or
(ii) the closing and opening system of the transfer channel comprises a second open position so that:
its closed position prevents any passage of material into the transfer channel on either side of the closing and opening system,
its first open position allows the transfer of material from the first millifluidic channel to the transfer channel or, conversely, from the transfer channel to the first millifluidic channel,
its second open position allows the transfer of material from the second millifluidic channel to the transfer channel or, conversely, from the transfer channel to the second millifluidic channel, and
wherein step (f) comprises the following successive substeps:
(f1) putting the first closing and opening system of the transfer channel in the open position in case (i) or the closing and opening system of the transfer channel in its first open position in case (ii) so as to allow the transfer of at least a part of the drop Aₙ from the first drop train into the transfer channel, then returning said closing and opening system of the transfer channel to the closed position,
(f2) putting the second closing and opening system of the transfer channel in the open position in case (i) or the closing and opening system of the transfer channel in its second open position in case (ii) so as to allow the transfer of material from the drop Aₙ of the first drop train which is present in the transfer channel to the drop Bₘ of the second drop train, then returning said closing and opening system of the transfer channel to the closed position;
or
(f'1) putting the second closing and opening system of the transfer channel in the open position in case (i) or the closing and opening system of the transfer channel in its second open position in case (ii) so as to allow the transfer of at least a part of the drop Bₘ from the second drop train into the transfer channel, then returning said closing and opening system of the transfer channel to the closed position;
(f'2) putting the first closing and opening system of the transfer channel in the open position in case (i) or the closing and opening system of the transfer channel in its first open position in case (ii) so as to allow the transfer of material from the drop Bₘ of the second drop train which is present in the transfer channel to the drop Aₙ of the first drop train, then returning said closing and opening system of the transfer channel to the closed position,
steps (f1) and (f'2) being implemented after step (d) and steps (f2) and (f'1) being implemented after step (e).

2. The method according to claim 1, wherein step (f) is implemented after steps (d) and (e) so that the closing and opening system of the transfer channel is in the open position once the drops Aₙ and Bₘ are positioned, respectively, at both ends of the transfer channel and allows the passage of material directly between the drops Aₙ and Bₘ via the transfer channel.

3. The method according to claim 2, wherein, during step (f), the pressure in the first channel and/or the second channel is adjusted so that
- the pressure is higher in the first channel relative to the pressure in the second channel to allow the transfer of at least a part of the drop Aₙ of the first drop train into the drop Bₘ of the second drop train;
or
- the pressure is higher in the second channel relative to the pressure in the first channel to allow the transfer of at least a part of the drop Bₘ of the second drop train into the drop Aₙ of the first drop train.

4. The method according to claim 1, wherein:
(i) the transfer channel comprises a second closing and opening system, the first closing and opening system being closer to the connection of the transfer channel to the first millifluidic channel than the second closing and opening system, and therefore the second closing and opening system is closer to the connection of the transfer channel to the second millifluidic channel than the first closing and opening system, the two closing and opening systems being placed in the closed position in step (a), or
(ii) the closing and opening system of the transfer channel comprises a second open position so that:
its closed position prevents any passage of material into the transfer channel on either side of the closing and opening system,
its first open position allows the transfer of material from the first millifluidic channel to the transfer channel or, conversely, from the transfer channel to the first millifluidic channel,
its second open position allows the transfer of material from the second millifluidic channel to the transfer channel or, conversely, from the transfer channel to the second millifluidic
channel, and
wherein step (f) comprises the following successive substeps:
(f1) putting the first closing and opening system of the transfer channel in the open position in case (i) or the closing and opening system of the transfer channel its first open position in case (ii) so as to allow the transfer of at least a part of the drop Aₙ from the first drop train into the transfer channel, then returning said closing and opening system of the transfer channel to the closed position,
(f2) putting the second closing and opening system of the transfer channel in the open position in case (i) or the closing and opening system of the transfer channel in its second open position in case (ii) so as to allow the transfer of material from the drop Aₙ of the first drop train which is present in the transfer channel to the drop Bₘ of the second drop train, then returning said closing and opening system of the transfer channel to the closed position;
or
(f'1) putting the second closing and opening system of the transfer channel in the open position in case (i) or the closing and opening system of the transfer channel in its second open position in case (ii) so as to allow the transfer of at least a part of the drop Bₘ from the second drop train into the transfer channel, then returning said closing and opening system of the transfer channel to the closed position;
(f'2) putting the first closing and opening system of the transfer channel in the open position in case (i) or the closing and opening system of the transfer channel in its first open position in case (ii) so as to allow the transfer of material from the drop Bₘ of the second drop train which is present in the transfer channel to the drop Aₙ of the first drop train, then returning said closing and opening system of the transfer channel to the closed position,
steps (f1) and (f'2) being implemented after step (d) and steps (f2) and (f'1) being implemented after step (e).

5. The method according to claim 4, wherein the transfer channel is further connected to a suction channel and to an addition channel, and wherein the pressure is adjusted in the different channels as follows:
- during step (f1) or (f'1), the pressure is higher in the donor channel relative to the pressure in the suction channel, the donor channel being the first millifluidic channel in the context of step (f1) and the second millifluidic channel in the context of step (f'1); then
- during step (f2) or (f'2), the pressure is higher in the addition channel relative to the pressure in the receiver channel, the receiver channel being the second millifluidic channel in the context of step (f2) and the first millifluidic channel in the context of step (f'2).

6. The method according to any one of claims 1 to 5, wherein the millifluidic device further comprises a system for the detection of drops such as an optical system, and advantageously is automated.

7. The method according to any one of claims 1 to 6, wherein the closing and opening system of the transfer channel is a cylinder valve, a translational valve, a pinch valve, such as a mechanical pinch valve or a pneumatic pinch valve, or a solenoid valve.

8. The method according to any one of Claims 1 to 7, wherein the continuous phase is a mineral or fluorinated oil; the phase constituting the drops comprises an aqueous solution; the phase constituting the optional spacer(s) is a gas such as air; or a liquid immiscible with the continuous phase and with the phase constituting the drops to be spaced, such as a mineral oil or a silicone oil.

9. The method according to any one of claims 1 to 8, wherein:
the first channel has an inner dimension D₁, where D₁ is the inner diameter of the first channel in a cylindrical geometry or the inner height or width of the first channel in a parallelepipedal geometry;
the second channel has an inner dimension D₂, where D₂ is the inner diameter of the second channel in a cylindrical geometry or the inner height or width of the second channel in a parallelepipedal geometry; and
D₁ and D₂ are independently comprised between 10 µm and 3 mm, especially comprised between 500 µm and 2.5 mm, advantageously comprised between 1.5 mm and 2.2 mm.

10. The method according to claim 9 wherein the transfer channel has an inner dimension d, where d is the inner diameter of the transfer channel in a cylindrical geometry or the inner height or width of the transfer channel in a parallelepipedal geometry;
D represents the smallest value between D₁ and D₂; and
the d/D ratio is comprised between 0.001 and 1, especially comprised between 0.01 and 0.2, advantageously comprised between 0.02 and 0.1.

11. The method according to any one of claims 1 to 10, comprising the following additional steps:
(h) eliminating the first drop train of the first millifluidic channel or the second drop train of the second millifluidic channel;
(i) generating, in the millifluidic channel released in step (h), a third drop train comprising a continuous phase, at least two drops and optionally at least one spacer between two successive drops Cₚ and Cₚ₊₁ where p ≥ 1;
(j) implementing steps (d) to g), the third drop train replacing the first drop train or the second drop train eliminated in step (h);
(k) optionally repeating steps (h) to (j) one or more times.

12. A use of the method according to any one of claims 1 to 11, for the preparation of biological or chemical samples, the implementation of biological or chemical reactions, the screening of a molecule of synthetic or biological origin or the screening or culture of microorganisms.

13. A millifluidic device comprising:
- a first millifluidic channel comprising an inlet E1 and on outlet S1;
- a second millifluidic channel comprising an inlet E2 and an outlet S2;
- a transfer channel connecting the first millifluidic channel to the second millifluidic channel;
- a closing and opening system making it possible to control the opening and closing of the transfer channel;
- a system for generating a drop train connected to both inlet E1 of the first channel and to inlet E2 of the second channel or two systems for generating a drop train connected, respectively, to inlet E1 of the first channel and to inlet E2 of the second channel;
- a control system for the pressure in the first millifluidic channel and in the second millifluidic channel;
- a system for detecting drops such as an optical system.

14. The device according to claim 13, wherein the closing and opening system of the transfer channel is a cylinder valve, a translational valve, a pinch valve, such as a mechanical pinch valve or a pneumatic pinch valve, or a solenoid valve.

15. The device according to any one of claims 13 and 14, further comprising at least a second transfer channel connecting the first channel to the second channel and a second closing and opening system making it possible to control the opening and closing of the second transfer channel.
